# EUROPEAN PATENT SPECIFICATION

(11) **EP 3 403 344 B1**
(45) Date of publication and mention of the grant of the patent: **04.03.2020**
(21) Application number: 16701692.2
(22) Date of filing: 13.01.2016
(51) Int. Cl.: H04L 1/00

(54) **CONTROL CHANNEL FOR A WIRELESS NETWORK**
STEUERKANAL FÜR EIN DRAHTLOSES NETZWERK
CANAL DE CONTRÔLE POUR UN RÉSEAU SANS FIL

(43) Date of publication of application: 21.11.2018
(73) Proprietor: Telefonaktiebolaget LM Ericsson (publ), 164 83 Stockholm (SE)
(72) Inventor: BIN SEDIQ, Akram, Ottawa, Ontario K2H 9A9 (CA); AHMAD, Talha, Kanata, Ontario K2M 2Y3 (CA)
(74) Representative: Zacco Sweden AB
(86) International application number: PCT/IB2016/050150
(87) International publication number: WO 2017/122045

(56) References cited:
- EP-A1- 2 804 336
- WO-A2-2007/132329
- NOKIA: "DL L1/L2 control signaling channel encoding structures", 3GPP DRAFT; R1-061907_DL SHARED CONTROL CHANNEL STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Cannes, France; 20060627 - 20060630 20 June 2006 (2006-06-20), XP050951310, Retrieved from the Internet: URL:http://www.3gpp.org/ftp/tsg_ran/WG1_RL 1/TSGR1_AH/LTE_AH_0606/Docs/ [retrieved on 2006-06-20]
- HUAWEI: "Evaluation of E-UTRA Downlink Control Information Coding Schemes", 3GPP DRAFT; R1-061923, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Cannes, France; 20060627 - 20060630 1 July 2006 (2006-07-01), XP050951329, Retrieved from the Internet: URL:http://www.3gpp.org/ftp/tsg_ran/WG1_RL 1/TSGR1_AH/LTE_AH_0606/Docs/ [retrieved on 2006-07-01]

## Description

### Technical Field

The present disclosure relates to a control channel in a wireless network.

### Background

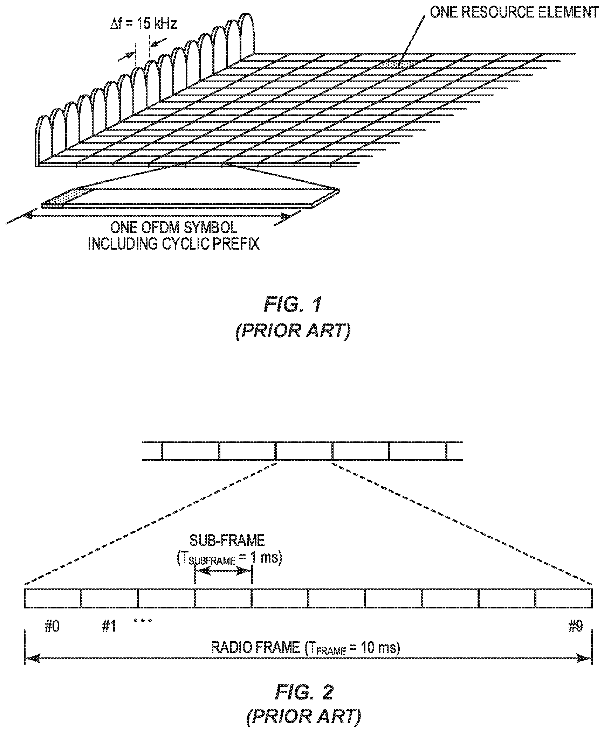

Third Generation Partnership Project (3GPP) Long Term Evolution (LTE) and LTE-Advanced use Orthogonal Frequency Division Multiplexing (OFDM) in the downlink and Discrete Fourier Transform (DFT) spread OFDM (DFT-spread OFDM), which is also referred to as single-carrier Frequency Division Multiple Access (FDMA), in the uplink. The basic LTE downlink physical resource can thus be seen as a time-frequency grid as illustrated in Figure 1, where each Resource Element (RE) corresponds to one OFDM subcarrier during one OFDM symbol interval. The uplink subframe has the same subcarrier spacing as the downlink and the same number of Single Carrier FDMA (SC-FDMA) symbols in the time domain as OFDM symbols in the downlink.

In the time domain, LTE downlink transmissions are organized into radio frames of 10 milliseconds (ms), each radio frame consisting of ten equally-sized subframes of length T_{SUBFRAME} = 1 ms as shown in Figure 2. For normal cyclic prefix, one subframe consists of 14 OFDM symbols. The duration of each symbol, including a normal cyclic prefix, is approximately 71.4 microseconds (µs).

Furthermore, the resource allocation in LTE is typically described in terms of resource blocks, where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth.

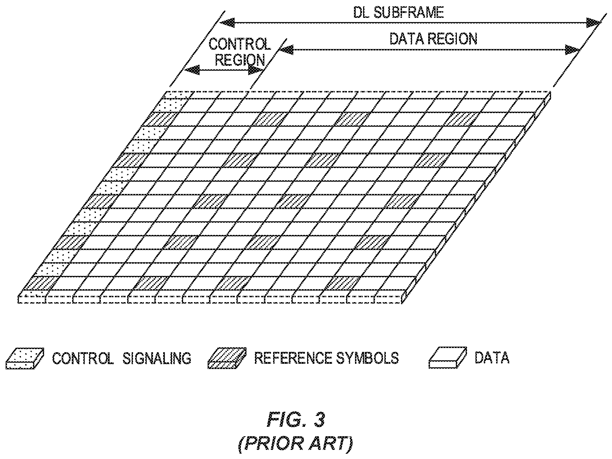

Downlink transmissions are dynamically scheduled, i.e., in each subframe the base station transmits control information about which terminals data is transmitted to and upon which resource blocks the data is transmitted, in the current downlink subframe. This control signaling is typically transmitted in the first 1, 2, 3, or 4 OFDM symbols in each subframe and the number n = 1, 2, 3, or 4 is obtained from the Control Format Indicator (CFI) as n=CFI when the system bandwidth is greater than or equal to 3 MHz, and n=CFI+1 otherwise. The OFDM symbols carrying this control signaling are also referred to herein as "control symbols". The downlink subframe also contains common reference symbols, which are known to the receiver and used for coherent demodulation of, e.g., the control information. A downlink system with CFI = 3 OFDM symbols as control is illustrated in Figure 3.

From LTE Release 11 (Rel-11) onwards, the above described control information can also be scheduled on the enhanced Physical Downlink Control Channel (EPDCCH). For Release 8 (Rel-8) to Release 10 (Rel-10), only the Physical Downlink Control Channel (PDCCH) is available to carry control information. The reference signals shown in Figure 3 are the Cell specific Reference Signals (CRSs) and are used to support multiple functions including channel estimation for certain transmission modes.

The PDCCH/EPDCCH is used to carry Downlink Control Information (DCI) such as scheduling decisions and power control commands. More specifically, the DCI includes downlink scheduling assignments, uplink scheduling grants, and power control commands. Downlink scheduling assignments include Physical Downlink Shared Channel (PDSCH) resource indication, transport format, Hybrid Automatic Repeat Request (HARQ) information, and control information related to spatial multiplexing (if applicable). A downlink scheduling assignment also includes a command for power control of the Physical Uplink Control Channel (PUCCH). The PUCCH is used for, e.g., transmission of HARQ acknowledgements in response to downlink scheduling assignments. Uplink scheduling grants include Physical Uplink Shared Channel (PUSCH) resource indication, transport format, and HARQ-related information. An uplink scheduling grant also includes a command for power control of the PUSCH. Power commands included in the DCI are power control commands for a set of terminals as a complement to the commands included in the scheduling assignments/grants.

One PDCCH/EPDCCH carries one DCI message containing one of the groups of information listed above. As multiple terminals can be scheduled simultaneously, and each terminal can be scheduled on both downlink and uplink simultaneously, there must be a possibility to transmit multiple scheduling messages within each subframe. Each scheduling message is transmitted on separate PDCCH/EPDCCH resources, and consequently there are typically multiple simultaneous PDCCH/EPDCCH transmissions within each subframe in each cell. Furthermore, to support different radio channel conditions, link adaptation can be used, where the code rate of the (E)PDCCH is selected by adapting the resource usage for the (E)PDCCH, to match the radio channel conditions.

The enhanced or evolved Node B (eNB) uses DCI to inform a User Equipment (UE) about a Physical Resource Block (PRB) allocation for the UE for a given downlink subframe, as well as a resource allocation for the UE for uplink access. As discussed above, this DCI is contained in the PDCCH or EPDCCH channels, which have a predetermined allocation in the subframe structure. For example, in the case of PDCCH, it can consume up to three OFDM symbols for bandwidths 3 Megahertz (MHz) and higher, and up to four symbols for the 1.4 MHz bandwidth.

The population of DCI messages into the frequency-time resource grid is governed by the following allocation scheme. A set of four REs is logically grouped together and called a Resource Element Group (REG). A set of 9 contiguous REGs comprises a single Control Channel Element (CCE). These CCEs are ultimately filled with DCI bits. Depending on the channel conditions of the desired UEs and the DCI payload size, communication of DCIs may require variable levels of protection, i.e., coding rate. To accommodate this variability, the concept of an Aggregation Level (AL) is introduced. Specifically, a single DCI can occupy 1, 2, 4, or 8 CCEs, which is what the AL represents. The value AL = 1 indicates minimum protection for the DCI, i.e., the minimum allowable number of PDCCH bits, which is 72. Conversely, AL = 8 indicates the maximum level of protection where 576 PDCCH bits are required for the transmission of a given DCI (see 3GPP Technical Specification (TS) 36.211 V12.7.0, Table 6.8.1-1).

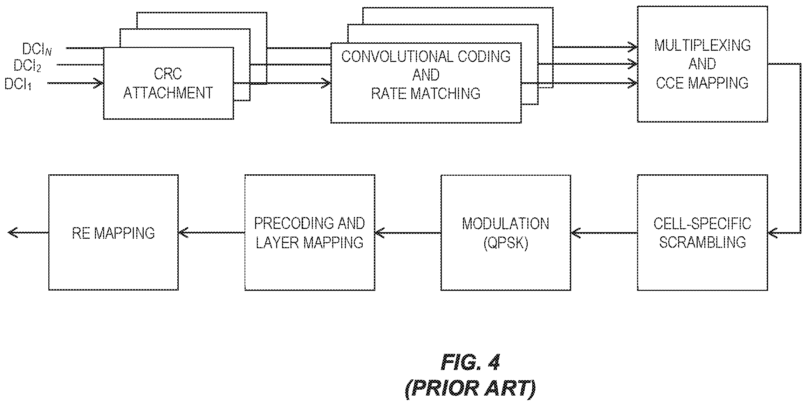

As illustrated in Figure 4, in existing LTE-based cellular systems, individual DCI messages (DCI₁ through DCI*_{N}*) are first attached to their corresponding Cyclic Redundancy Check (CRC) bits and then encoded using convolutional coding. In particular, LTE-based cellular systems employ a rate-1/3 realization of the coding scheme (see, 3GPP TS 36.212 V12.6.0, Table 5.1.3-1). This channel coding scheme is considered to be a relatively weak one that yields modest coding gains compared to more advanced channel coding schemes when the block lengths are large. The process of encoding the DCI messages is accompanied by a rate-matching technique in order to meet the PDDCH bit requirements dictated by the AL. These encoded and rate-matched DCI messages are then multiplexed together and mapped to CCEs before undergoing further processing (i.e., cell specific scrambling, modulation, precoding and layer mapping, and RE mapping).

At the UE end, the process is more or less the reverse of the one shown in Figure 4. The UE is unaware of the AL or the coding rate for each of the DCI messages. Therefore, the UE iterates through all possible PDCCH candidates and attempts blind decoding on individual DCI messages until the UE has identified all DCI messages that are relevant to that UE (see, 3GPP TS 36.213 V12.5.0, Table 9.1.1-1). The remaining DCI messages are discarded.

Before the UE can decode the control information in the DCI messages that are relevant to the UE, the UE needs to know the number of symbols in a given subframe that are reserved for the control channel. This number can vary depending on the control channel requirements and the system bandwidth. The number of symbols in a given subframe that are reserved for the control channel is conveyed to the UE using the CFI. The CFI is encoded in the Physical Control Format Indicator Channel (PCFICH), which is located in the first symbol of every subframe.

While the current downlink control channels (PDCCH and EPDCCH) work well, there is a need for an improved downlink control channel for future cellular communications networks (e.g., Fifth Generation (5G) and beyond).

EP 2 804 336 A1 discloses a method and an apparatus for transmitting control information. The method includes: grouping user UEs in a cell, and obtaining second control information of each UE group after grouping; performing joint channel coding on the second control information of each UE group; obtaining first control information, and transmitting the first control information to the UEs in the cell, where the first control information includes indication information of the second control information, on which joint channel coding has been performed, of each UE group, so as to obtain the second control information according to the indication information; and transmitting the second control information, on which joint channel coding has been performed, of each UE group to the UEs in the cell.

WO 2007/132329 A2 discloses that resources are allocated on a shared downlink control channel by an allocation table that is partitioned into a first, fixed length partition and into at least one second, variable length partition. The fixed length and the modulation and coding scheme MCS of the first partition is known a priori. The second variable length and the MCS of the second partition may be given in the first partition. Robustness may be varied between different second partitions of the same allocation table, or even within a single second partition to account for users at different proximity to the network node giving the allocations. Users may be identified in the first partition (e.g., a fixed number of users), and/or in the second partition (either additional allocated users or all users being allocated if the first partition does not identify users).

NOKIA: "DL L1/L2 control signaling channel encoding structures", 3GPP Draft; R1-061907, XP050951310, discloses multi-part joint encoding of UEs on downlink control channel.

### Summary

The present invention relates to methods and apparatuses for transmitting/receiving downlink control and user data messages on/from a downlink control channel, according to the attached claims.Non-claimed embodiments of the description are only provided for a better understanding of the invention.

Systems and methods relating to a data block structure for a control channel in a wireless network are disclosed. In some embodiments, a method of operation of a radio access node of a cellular communications network comprises constructing a block of data for transmission on a downlink control channel. The block of data comprises multiplexed sub-blocks comprising Downlink Control Information (DCI) sub-blocks. The DCI sub-blocks comprise respective DCI messages. The method further comprises encoding and modulating the block of data to provide an encoded and modulated block of data, and transmitting the encoded and modulated block of data on the downlink control channel. In some embodiments, the block of data enables the use of advanced encoding schemes.

In some embodiments, encoding and modulating the block of data comprises encoding the block of data according to an advanced encoding scheme to provide an encoded block of data and modulating the encoded block of data to provide the encoded and modulated block of data. In some embodiments, the advanced encoding scheme is a Turbo encoding scheme, a Polar encoding scheme, a Low-Density Parity Check (LDPC) encoding scheme, or a Convolutional encoding scheme.

In some embodiments, the multiplexed sub-blocks further comprise one or more data sub-blocks, the one or more data sub-blocks each comprising respective data.

In some embodiments, all of the multiplexed sub-blocks have a predefined, fixed sub-block length for all such blocks of data.

In some embodiments, all of the multiplexed sub-blocks have a fixed sub-block length specific to the block of data. Further, in some embodiments, the block of data further comprises a block header comprising at least one of: an indication of the fixed sub-block length specific to the block of data and a number of sub-blocks in the block of data.

In some embodiments, lengths of the multiplexed of sub-blocks are variable. Further, in some embodiments, the block of data further comprises a block header comprising, for each sub-block of the multiplexed sub-blocks, an indication of the length of the sub-block. In other embodiments, each sub-block of the multiplexed sub-blocks comprises a respective sub-block header comprising an indication of the length of the sub-block.

In some embodiments, each sub-block of the multiplexed sub-blocks comprises a respective sub-block header comprising an identifier, the identifier being a unique wireless device identifier or an identifier that is specific to a group of wireless devices.

In some embodiments, constructing the block of data for transmission on the downlink control channel comprises performing sub-block-level Cyclic Redundancy Check (CRC) attachment for a plurality of messages/data comprising the DCI messages, and multiplexing the plurality of messages/data to thereby provide the multiplexed sub-blocks. As used herein, the term "message/data" is a general term that refers to a DCI message or data. In other words, a "message/data" is a general term that encompasses a DCI message or data. Note, however, that the use of "a plurality of messages/data" refers to either: (a) a plurality of DCI messages, (b) a plurality of data, or (c) a plurality of DCI messages and data. Further, in some embodiments, for at least one of the plurality of messages/data, a respective CRC is scrambled with an identifier, the identifier being a unique wireless device identifier or an identifier that is specific to a group of wireless devices.

In some embodiments, constructing the block of data for transmission on the downlink control channel comprises multiplexing a plurality of messages/data comprising the DCI messages to thereby provide the multiplexed sub-blocks, and performing block-level CRC attachment for the block of data comprising the multiplexed sub-blocks.

In some embodiments, constructing the block of data for transmission on the downlink control channel comprises constructing the block of data for transmission on the downlink control channel such that a DCI message relevant to a particular wireless device is assigned to one of a predefined subset of the multiplexed sub-blocks within the block of data.

In some embodiments, the method further comprises transmitting an indicator that comprises information that is indicative of: a number of control symbols in a downlink subframe in which the downlink control channel is transmitted and either (a) a modulation and/or coding scheme used for all control channels transmitted in the control symbols in the downlink subframe or (b) for each of a plurality of subsets of control channels transmitted in the control symbols in the downlink subframe, a modulation and/or coding scheme used for the subset of the control channels. Further, in some embodiments, the indicator further comprises information that is indicative of either: (a) a coding rate used for all control channels transmitted in the control symbols in the downlink subframe or (b) for each of a plurality of subsets of control channels transmitted in the control symbols in the downlink subframe, a coding rate used for the subset of the control channels. In some embodiments, the one or more control symbols comprised in the downlink subframe comprise a plurality of control symbols that can have different modulation and/or coding schemes and different coding rates, and the indicator comprises information that is indicative of, for each control symbol of the plurality of control symbols, a modulation and/or coding scheme for the control symbol.

Embodiments of a radio access node of a cellular communications network are also disclosed. In some embodiments, the radio access node comprises one or more radio units and a baseband unit adapted to construct a block of data for transmission on a downlink control channel, the block of data comprises multiplexed sub-blocks comprising DCI sub-blocks, wherein the DCI sub-blocks comprise respective DCI messages; encode and modulate the block of data to provide an encoded and modulated block of data; and transmit, via the one or more radio units, the encoded and modulated block of data on the downlink control channel.

In some embodiments, the baseband unit comprises sub-block level CRC attachment functions adapted to attach CRC bits to a plurality of messages/data, the plurality of messages/data comprising the plurality of DCI messages; a multiplexing function adapted to, subsequent to CRC attachment, multiplex the plurality of messages/data to thereby provide the plurality of multiplexed sub-blocks; a coding and rate matching function adapted to encode the plurality of multiplexed sub-blocks to provide an encoded block of data; and a modulation function adapted to modulate the encoded block of data to thereby provide the encoded and modulated block of data.

In some embodiments, the baseband unit comprises a multiplexing function adapted to multiplex a plurality of messages/data to thereby provide an non-encoded block of data comprising the plurality of multiplexed sub-blocks, the plurality of messages/data comprising the plurality of DCI messages; a block-level CRC attachment function adapted to attach CRC bits to the non-encoded block of data; a coding and rate matching function adapted to, subsequent to CRC attachment, encode the non-encoded block of data to provide an encoded block of data; and a modulation function adapted to modulate the encoded block of data to thereby provide the encoded and modulated block of data.

In some embodiments, a radio access node of a cellular communications network comprises a block construction module operable to construct a block of data for transmission on a downlink control channel, the block of data comprising multiplexed sub-blocks comprising DCI sub-blocks, wherein the DCI sub-blocks comprise respective DCI messages. The radio access node further comprises a transmission module operable to encode and modulate the block of data to provide an encoded and modulated block of data and transmit, via one or more radio units of the radio access node, the encoded and modulated block of data on the downlink control channel.

In some embodiments, a radio access node of a cellular communications network comprises a means for constructing a block of data for transmission on a downlink control channel, the block of data comprising multiplexed sub-blocks comprising DCI sub-blocks, wherein the DCI sub-blocks comprise respective DCI messages. The radio access node further comprises a means for encoding and modulating the block of data to provide an encoded and modulated block of data and a means for transmitting the encoded and modulated block of data on the downlink control channel.

Embodiments of a method of operation of a wireless device in a cellular communications network are also disclosed. In some embodiments, the method of operation of the wireless device comprises demodulating and decoding an encoded and modulated block of data received on a downlink control channel to provide a decoded and demodulated block of data comprising multiplexed sub-blocks. The multiplexed sub-blocks comprise DCI sub-blocks comprising respective DCI messages. The method further comprises extracting and processing one or more of the multiplexed sub-blocks that are relevant to the wireless device.

In some embodiments, demodulating and decoding the encoded and modulated block of data comprises demodulating the encoded and modulated block of data to provide a demodulated block of data and decoding the demodulated block of data according to an advanced decoding scheme to provide the decoded and demodulated block of data. In some embodiments, the advanced decoding scheme is a Turbo decoding scheme, a Polar decoding scheme, an LDPC decoding scheme, or a convolutional decoding scheme.

In some embodiments, the multiplexed sub-blocks further comprise one or more data sub-blocks, the one or more data sub-blocks each comprising respective data.

In some embodiments, all of the multiplexed sub-blocks have a predefined, fixed sub-block length for all such blocks of data.

In some embodiments, all of the multiplexed sub-blocks have a fixed sub-block length specific to the decoded and demodulated block of data. Further, in some embodiments, the decoded and demodulated block of data further comprises a block header comprising at least one of: an indication of a fixed sub-block length specific to the decoded and demodulated block of data and a number of sub-blocks in the decoded and demodulated block of data.

In some embodiments, lengths of the multiplexed sub-blocks are variable. Further, in some embodiments, the decoded and demodulated block of data further comprises a block header comprising, for each sub-block of the plurality of multiplexed sub-blocks, an indication of the length of the sub-block. In other embodiments, each sub-block of the multiplexed sub-blocks comprises a respective sub-block header comprising an indication of the length of the sub-block.

In some embodiments, each sub-block of the multiplexed sub-blocks comprises a respective sub-block header comprising an identifier, the identifier being a unique wireless device identifier or an identifier that is specific to a group of wireless devices.

In some embodiments, extracting and processing the one or more of the multiplexed sub-blocks that are relevant to the wireless device comprises, for each sub-block of at least a subset of the multiplexed sub-blocks of the decoded and demodulated block of data, performing sub-block-level CRC for the sub-block, reading a sub-block header of the sub-block, determining whether the sub-block is relevant to the wireless device based on information comprised in the sub-block header of the sub-block, and processing the sub-block if the sub-block is determined to be relevant to the wireless device.

In some embodiments, extracting and processing the one or more of the multiplexed sub-blocks that are relevant to the wireless device comprises, for each sub-block of at least a subset of the multiplexed sub-blocks of the decoded and demodulated block of data, performing a sub-block-level CRC for the sub-block where CRC bits for the sub-block are scrambled with either a unique wireless device identifier or an identifier that is specific to a group of wireless devices, determining whether the sub-block is relevant to the wireless device based on an outcome of performing the sub-block-level CRC for the sub-block, and processing the sub-block if the sub-block is determined to be relevant to the wireless device.

In some embodiments, extracting and processing the one or more of the multiplexed sub-blocks that are relevant to the wireless device comprises performing block-level CRC for the decoded and demodulated block of data and, for each sub-block of at least a subset of the multiplexed sub-blocks of the decoded and demodulated block of data, reading a sub-block header of the sub-block, determining whether the sub-block is relevant to the wireless device based on information comprised in the sub-block header of the sub-block, and processing the sub-block if the sub-block is determined to be relevant to the wireless device.

In some embodiments, the at least a subset of the multiplexed sub-blocks is a subset of the plurality of multiplexed sub-blocks assigned to the wireless device. In other embodiments, the at least a subset of the multiplexed sub-blocks is all of the multiplexed sub-blocks.

In some embodiments, extracting and processing the one or more of the multiplexed sub-blocks that are relevant to the wireless device further comprises reading a block header of the demodulated and decoded block of data, the block header comprising at least one of: an indication of the fixed sub-block length specific to the decoded and demodulated block of data and a number of sub-blocks in the decoded and demodulated block of data.

In some embodiments, extracting and processing the one or more of the multiplexed sub-blocks that are relevant to the wireless device further comprises reading a block header of the demodulated and decoded block of data, the block header comprising, for each sub-block of the multiplexed sub-blocks, an indication of the length of the sub-block.

In some embodiments, the method of operation of the wireless device further comprises receiving an indicator that comprises information that is indicative of: a number of control symbols in a downlink subframe in which the downlink control channel is transmitted and a modulation and/or coding scheme used for all control channels transmitted in the control symbols in the downlink subframe. In some embodiments, the indicator further comprises information that is indicative of a coding rate used for all control channels transmitted in the control symbols comprised in the downlink subframe.

In some embodiments, the method of operation of the wireless device further comprises receiving an indicator that comprises information that is indicative of a number of control symbols in a downlink subframe in which the downlink control channel is transmitted and, for each of a plurality of subsets of control channels transmitted in the control symbols in the downlink subframe, a modulation and/or coding scheme used for the subset of the control channels. In some embodiments, the indicator further comprises information that is indicative of, for each of the plurality of subsets of control channels, a coding rate used for the subset of the control channels.

Embodiments of a wireless device are also disclosed. In some embodiments, the wireless device comprises a transceiver and one or more processing circuits adapted to: demodulate and decode an encoded and modulated block of data received on a downlink control channel to provide a decoded and demodulated block of data comprising multiplexed sub-blocks, the multiplexed sub-blocks comprising a DCI sub-blocks comprising respective DCI messages; and extract and process one or more of the multiplexed sub-blocks that are relevant to the wireless device.

In some embodiments, the wireless device is adapted to operate according to any of the embodiments of the method of operation of the wireless device described above.

In some embodiments, a wireless device enabled to operate in a cellular communications network comprises a block demodulation and decoding module operable to demodulate and decode an encoded and modulated block of data received on a downlink control channel to provide a decoded and demodulated block of data comprising a multiplexed sub-blocks, the multiplexed sub-blocks comprising DCI sub-blocks comprising respective DCI messages. The wireless device further comprises a sub-block extraction and processing module operable to extract and process one or more of the plurality of multiplexed sub-blocks that are relevant to the wireless device.

In some embodiments, a wireless device enabled to operate in a cellular communications network comprises: a means for demodulating and decoding an encoded and modulated block of data received on a downlink control channel to provide a decoded and demodulated block of data comprising multiplexed sub-blocks, the multiplexed sub-blocks comprising DCI sub-blocks comprising respective DCI messages; and a means for extracting and processing one or more of the plurality of multiplexed sub-blocks that are relevant to the wireless device.

Still further, in some embodiments, a method of operation of a radio access node of a cellular communications network comprises transmitting an indicator that comprises information that is indicative of: a number of control symbols in a downlink subframe and either (a) a modulation and/or coding scheme used for all control channels transmitted in the control symbols in the downlink subframe or (b) for each of a plurality of subsets of control channels transmitted in the control symbols in the downlink subframe, a modulation and/or coding scheme used for the subset of the control channels. Further, in some embodiments, the indicator further comprises information that is indicative of either: (a) a coding rate used for all control channels transmitted in the control symbols in the downlink subframe or (b) for each of a plurality of subsets of control channels transmitted in the control symbols in the downlink subframe, a coding rate used for the subset of the control channels.

Still further, in some embodiments, a method of operation of a wireless device in a cellular communications network comprises receiving an indicator that comprises information that is indicative of: a number of control symbols in a downlink subframe and either (a) a modulation and/or coding scheme used for all control channels transmitted in the control symbols in the downlink subframe or (b) for each of a plurality of subsets of control channels transmitted in the control symbols in the downlink subframe, a modulation and/or coding scheme used for the subset of the control channels. Further, in some embodiments, the indicator further comprises information that is indicative of either: (a) a coding rate used for all control channels transmitted in the control symbols in the downlink subframe or (b) for each of a plurality of subsets of control channels transmitted in the control symbols in the downlink subframe, a coding rate used for the subset of the control channels.

Those skilled in the art will appreciate the scope of the present disclosure and realize additional aspects thereof after reading the following detailed description of the embodiments in association with the accompanying drawing figures.

### Brief Description of the Drawings

The accompanying drawing figures incorporated in and forming a part of this specification illustrate several aspects of the disclosure, and together with the description serve to explain the principles of the disclosure.
Figure 1 is a schematic diagram of an example Orthogonal Frequency Division Multiplexing (OFDM) downlink physical resource;
Figure 2 is a schematic diagram of an example OFDM time-domain structure;
Figure 3 is a schematic diagram of an example OFDM downlink subframe;
Figure 4 is a block diagram that illustrates Downlink Control Information (DCI) message processing in Long Term Evolution (LTE) and LTE-Advanced;
Figure 5 illustrates a cellular communications network according to some embodiments of the present disclosure;
Figure 6 illustrates the operation of a base station and a wireless device of Figure 5 to transmit and receive a downlink control channel including a block of data that includes multiple multiplexed DCI messages and, optionally, data according to some embodiments of the present disclosure;
Figure 7 illustrates a block of data for transmission on a downlink control channel according to some embodiments of the present disclosure;
Figure 8 illustrates a block of data for transmission on a downlink control channel according to some other embodiments of the present disclosure;
Figure 9 illustrates a block of data for transmission on a downlink control channel according to some other embodiments of the present disclosure;
Figure 10 is a block diagram of a portion of a base station that constructs a block of data and encodes and modulates the block of data for transmission on a downlink control channel according to some embodiments of the present disclosure;
Figure 11 is a block diagram of a portion of a base station that constructs a block of data and encodes and modulates the block of data for transmission on a downlink control channel according to some other embodiments of the present disclosure;
Figure 12 is a flow chart that illustrates the operation of a base station to construct a block of data and to encode and modulate the block of data for transmission on a downlink control channel according to some embodiments of the present disclosure;
Figure 13 is a flow chart that illustrates the operation of a wireless device to demodulate, decode, and process a block of data received on a downlink control channel according to some embodiments of the present disclosure;
Figure 14 illustrates one example of a downlink subframe in which different control symbols have different modulation schemes and coding rates according to some embodiments of the present disclosure;
Figure 15 illustrates the operation of a base station and a wireless device to utilize an enhanced Control Format Indicator (eCFI) according to some embodiments of the present disclosure;
Figures 16 and 17 illustrate embodiments of a base station; and
Figures 18 and 19 illustrate embodiments of a wireless device.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

**Radio Node:** As used herein, a "radio node" is either a radio access node or a wireless device.

**Radio Access Node:** As used herein, a "radio access node" is any node in a radio access network of a cellular communications network that operates to wirelessly transmit and/or receive signals. Some examples of a radio access node include, but are not limited to, a base station (e.g., an enhanced or evolved Node B (eNB) in a Third Generation Partnership Project (3GPP) Long Term Evolution (LTE) network), a high-power or macro base station, a low-power base station (e.g., a micro base station, a pico base station, a home eNB, or the like), and a relay node.

**Cellular Network Node:** As used herein, a "cellular network node" is any node that is either part of the radio access network or the core network of a cellular communications network/system.

**Wireless Access Node:** As used herein, a "wireless access node" is any node in a wireless network that operates to provide wireless access to the wireless network. Some examples of a wireless access node include a radio access node, which provides radio access to a cellular communications network, and an access point providing wireless access to a Wireless Local Area Network (WLAN) such as, for example, an IEEE 802.11 wireless network (i.e., a Wi-Fi network).

**Network Node:** As used herein, a "network node" is any node in a wireless network. Some examples of a network node include a cellular network node (e.g., a radio access node or a core network node of a cellular communications network) and a wireless access node.

**Wireless Device:** As used herein, a "wireless device" is any type of device that has access to (i.e., is served by) a wireless network (e.g., a cellular communications network) by wirelessly transmitting and/or receiving signals to a wireless access node (e.g., a radio access node). Some examples of a wireless device include, but are not limited to, a User Equipment device (UE) in a 3GPP LTE network, a Machine Type Communication (MTC) device, etc.

For the sake of presentation, embodiments of the present disclosure are described with respect to a cellular communications network, or system, that is implemented based on the LTE and LTE-Advanced standards. Nevertheless, the embodiments described herein are equally applicable to other types of wireless networks, or systems, in which a downlink control channel is utilized to communicate control information from a wireless access node to a wireless device.

Systems and methods relating to an improved downlink control channel for a wireless network (e.g., a cellular network) are disclosed. However, before describing embodiments of the present disclosure, a brief discussion of some issues with the conventional downlink control channel utilized in, e.g., LTE and LTE-Advanced is beneficial.

For any of the Downlink Control Information (DCI) formats supported in LTE or LTE-Advanced, the payload size of a given DCI message, including the Cycle Redundancy Check (CRC) bits, is relatively small. Specifically, the payload size ranges between 25 and 80 bits (see, 3GPP Technical Specification (TS) 36.212 V12.6.0, Sec. 5.3.3). Given this small payload size and that each DCI message is encoded individually, a relatively low power channel coding scheme is selected, i.e., Convolutional Coding. Using the conventional Physical Downlink Control Channel (PDCCH) and enhanced PDCCH (EPDDCH) and DCI formats, a more powerful coding scheme would yield diminishing gains at the expense of increased computational complexity due to the small payload size of the DCI message. However, using Convolutional Coding on individual DCI messages is wasteful of channel resources for transmitting control information, which in turn adversely affects the throughput of the system.

The existing PDCCH solution is also inefficient in terms of channel resource utilization in scenarios where the number of scheduled DCI messages is small. For instance, if the Control Format Indicator (CFI) is 1, i.e., only the first symbol of the subframe is reserved for control information, then there will be a predetermined number of Control Channel Elements (CCEs) available for the PDCCH. If there is only a single DCI message to be scheduled, only a limited number of CCEs will be used. The remaining CCEs will remain empty, yet unusable for any other purpose.

The existing PDCCH solution also limits the modulation scheme of control symbols to be Quadrature Phase Shift Keying (QPSK) (see 3GPP TS 36.211 V12.7.0, Table 6.8.3-1). This means that the spectral efficiency of these symbols is always less than or equal to 2 bit/sec/Hertz (Hz), even if all the UEs to be scheduled for control information are experiencing good channel conditions.

At the UE end, the current implementation requires the UE to perform blind decoding. This implies that the UE must iterate through various PDCCH candidates in order to find the ones that are relevant to that particular UE. Each of these candidates requires a decoding operation, and hence the search can be computationally intensive.

Embodiments of the present disclosure overcome the aforementioned limitations of the conventional control channel implementation, wherein DCI messages with small payloads are encoded individually, which limits the performance of channel coding schemes. Embodiments of the present disclosure enable the use of more powerful coding schemes such as, e.g., Turbo, Low-Density Parity Check (LDPC), or Polar Codes to encode a larger block of information, or data (referred to herein as a "block of data" or a "data block"). This block of data is larger in size because it is comprised of multiple DCI messages, and also potentially other non-control information such as user data. This larger block of data gives the ability to harness significant coding gains of more powerful channel coding schemes. Multiple variants of the structure of the block of data are described below. However, these variants are examples. Other variations of the block of data including multiple DCI messages and, optionally, non-control information may be used.

Also, embodiments of an improved, or enhanced, indicator (sometimes referred to herein as an enhanced Control Format Indicator (eCFI)) for indicating not only the number of control symbols in the control channel but also additional information for the control channel are disclosed. The additional information is indicative of a level of protection provided by the control channel. More specifically, in some embodiments, this enhanced indictor includes information indicative of the number of control symbols in the control channel, one or more modulation schemes used for one or more control symbols in the control channel, and one or more coding rates used for the one or more control symbols in the control channel.

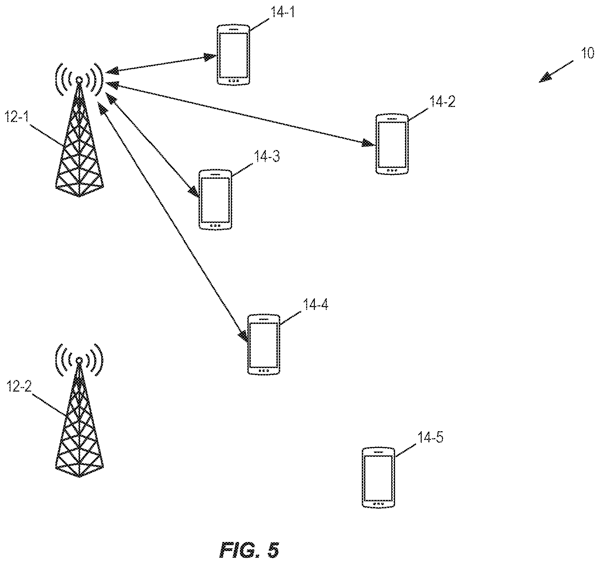

In this regard, Figure 5 illustrates a cellular communications network 10 according to some embodiments of the present disclosure. Again, while the description herein focuses on embodiments that are implemented in the cellular communications network 10, the embodiments described herein may be implemented in other types of wireless networks. Further, the embodiments described herein focus on an LTE or LTE-Advanced cellular communications network or a future evolution of LTE or LTE-Advanced and, as such, 3GPP terminology is oftentimes used. However, the use of 3GPP terminology is only for purposes of illustration and is not intended to limit the scope of the present disclosure to 3GPP cellular networks.

As illustrated, the cellular communications network 10 includes a number of base stations 12-1 and 12-2 (generally referred to herein collectively as base stations 12 and individually as base station 12). In some embodiments, the base stations 12 are eNBs. The base stations 12 serve wireless devices 14-1 through 14-5 (generally referred to herein collectively as wireless devices 14 and individually as wireless device 14) in their corresponding coverage areas. The wireless devices 14 may be, for example, UEs.

Without the loss of generality, the description herein focuses on: (a) a single-cell scenario, where a single base station 12 communicates with an arbitrary number of UEs 14, as illustrated in Figure 5 and (b) a single subframe with S Orthogonal Frequency Division Multiplexing (OFDM) symbols, where *S* is generally 14 for unicast scenarios in LTE and LTE-Advanced, in which a subset of the UEs 14 is served.

Each base station 12 has knowledge of the channel quality information for each of the UEs 14 that the base station 12 is serving. This information can either be fed back to the base station 12 by the UEs 14, or measured by the base station 12 itself by leveraging the reciprocity of the channel (if applicable) or by utilizing the success and failure of downlink transmissions through HARQ acknowledgments (ACKs) and negative acknowledgments (NACKs) fed back to the base station 12 by the UEs 14 or any other relevant technique. Furthermore, the base station 12 is assumed to have a link adaption mechanism that utilizes the channel quality information to determine the highest modulation level that can be used for the transmission of DCI for each UE 14 without violating the desired packet error rate requirement. The embodiments described herein are applicable for any link adaption mechanism.

In some embodiments, a new and more spectrally efficient method for populating a control channel is introduced. In general, multiple DCI messages and, in some embodiments, non-control information (e.g., user data) sub-blocks are multiplexed into a larger block of data. This larger block of data gives the ability to harness the gains of powerful coding schemes such as, e.g., Turbo coding, Polar coding, LDPC coding, or the like. Even the use of convolutional coding provides higher gain as the length of the block increases. In particular, a block of data is L bits in length. This block of data is comprised of *N* DCI messages, which may include common and/or wireless device specific DCI messages, corresponding to the wireless devices 14 being served in the current subframe. In addition, in some embodiments, the block of data further includes *M* sub-blocks of user data or other non-control information, which is hereby referred to as "data" for the sake of generality. The overall block is therefore segmented into *N* + *M* sub-blocks. The *N* sub-blocks that include the *N* DCI messages are referred to herein as DCI sub-blocks. Conversely, the *M* sub-blocks of data are referred to herein as data sub-blocks. Various embodiments (or "variants") of the composition of the block of data are described below.

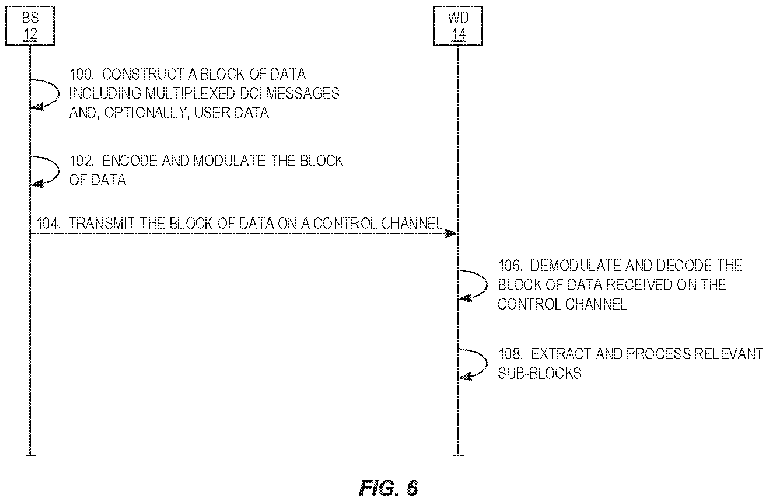

Before describing these variants, Figure 6 illustrates the operation of the base station 12 and the wireless device 14 to transmit and receive a downlink control channel including a block of data that includes multiple multiplexed DCI messages and, optionally, data according to some embodiments of the present disclosure. As illustrated, the base station 12 constructs a block of data including multiplexed DCI messages and, optionally (i.e., in some embodiments), data (e.g., user data or non-control data) (step 100). In other words, the block of data includes multiple (i.e., *N* + *M* sub-blocks, where *N* ≥ 1 and M ≥ 0) multiplexed sub-blocks. The multiplexed sub-blocks include multiple (*N*) DCI sub-blocks, each including a respective DCI message. Thus, each DCI sub-block includes its own DCI message. In addition, in some embodiments, the multiplexed sub-blocks include one or more (*M*) data sub-blocks, each including data (e.g., user data).

The base station 12 encodes and modulates the block of data (step 102). In some embodiments, the base station 12 encodes the block of data using an advanced encoding scheme such as, for example, Turbo coding, Polar encoding, LDPC encoding, or the like. However, other encoding schemes (e.g., Convolutional Coding) may be used. The base station 12 transmits the encoded and modulated block of data on a downlink control channel (step 104). In some embodiments, the downlink control channel spans a defined number (e.g., one or more) OFDM symbols at the start of a downlink subframe. However the downlink control channel is not limited thereto.

The wireless device 14 demodulates and decodes the block of data received on the control channel (step 106). Importantly, because the block of data is encoded at the block level, the wireless device 14 only needs to decode the block of data once. At that point, the decoded sub-blocks are available. The wireless device 14 extracts and processes sub-blocks that are relevant to the wireless device 14 (step 108). For example, in some embodiments, the sub-blocks include respective sub-block headers, where the sub-block header of a sub-block includes either a unique wireless device identifier or an identifier that is specific to a group of wireless devices 14. In this example, the wireless device 14 can then examine the sub-block headers to determine which of the sub-blocks are relevant to the wireless device 14. In other embodiments, CRC attachment is performed at the sub-block level (i.e., for each sub-block) and the CRC bits are scrambled using either a unique wireless device identifier or an identifier that is specific to a group of wireless devices 14. This case, the wireless device 14 can determine which of the sub-blocks are relevant to the wireless device 14 based on the scrambled CRC bits of the sub-blocks and either a known identifier of the wireless device 14 or a known group identifier of the wireless device 14. Once the relevant sub-block(s) is(are) identified, wireless device 14 processes the respective DCI message or data, e.g., in the conventional manner. For example, if a relevant sub-block includes a DCI message, the wireless device 14 processes the DCI message to, for example, obtain a downlink allocation and/or to obtain an uplink allocation.

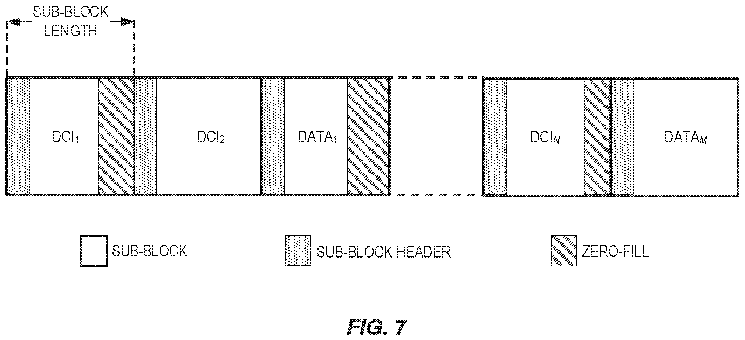

Figure 7 illustrates a block of data for transmission on a downlink control channel according to some embodiments of the present disclosure. This is referred to herein as "variant 1" of the block structure. The block of data includes *N* DCI sub-blocks carrying *N* DCI messages, respectively, and *M* data sub-blocks carrying data that are multiplexed for a total of *N* + *M* sub-blocks, as discussed above. Here, the sub-block length (i.e., the length of each sub-block) is permanent (i.e., fixed across all blocks of data). In other words, the length of each sub-block is fixed to a value that will not change, and all sub-blocks have this same sub-block length. Notably, as used herein, the "length" of a sub-block or "sub-block length" is a number of bits in the sub-block. The permanent sub-block length is designed to be large enough to at least be able to contain the largest possible DCI payload size, including the CRC for embodiments in which CRC is performed for each sub-block separately (i.e., for embodiments in which CRC is performed at the sub-block level). The first few bits of each sub-block serve as its header. This header is referred to herein as a "sub-block header." The sub-block header contains an identifier that the wireless device 14 could use to determine whether the sub-block contains control information or data that is relevant to the wireless device 14. This identifier may be a unique wireless device identifier (i.e., an identifier that is specific to the wireless device 14 to which the sub-block is relevant) or an identifier that is specific to a group of wireless devices 14. In some embodiments, the identifier is based on a Radio Network Temporary Identifier (RNTI) or any other identification mechanism. In cases where the length of the sub-block header and payload combined is smaller than the permanent sub-block length, the trailing bits could be zero-filled. Having a permanent length for all sub-blocks is advantageous because the wireless device 14 can be aware of this length beforehand, and does not need to determine this piece of information at runtime, which would simplify the implementation.

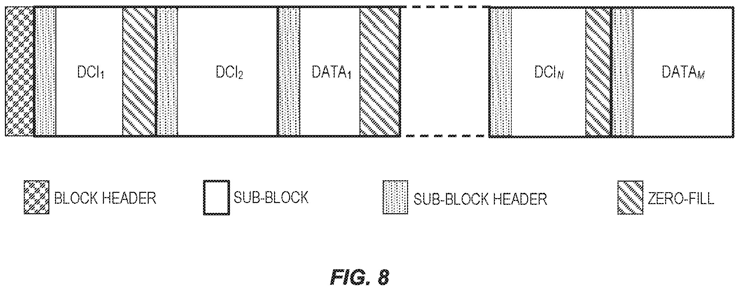

Figure 8 illustrates a block of data for transmission on a downlink control channel according to some embodiments of the present disclosure. This is referred to herein as "variant 2" of the block structure. Again, the block of data includes *N* DCI sub-blocks carrying *N* DCI messages, respectively, and *M* data sub-blocks carrying data that are multiplexed for a total of *N* + *M* sub-blocks, as discussed above. Here, the sub-block length (i.e., the length of each sub-block) is fixed within a given block of data. In other words, all sub-blocks within a given block of data have the same, fixed sub-block length, but the fixed sub-block length may vary from one block of data to another. The block structure in this embodiment is similar to that described above with respect to the embodiment of Figure 7. Since a wireless device 14 decoding the block of data would not have prior knowledge about the sub-block length, in this embodiment, the block of data includes a header of its own, which conveys either the number of sub-blocks in the block of data or the size of each sub-block. The header of the block of data is referred to herein as a "block header." For example, if the length of the block of data is known and the block header conveys the number of sub-blocks in the block of data, then the wireless device 14 can determine the fixed sub-block length of the sub-blocks in the block of data. The advantage of this approach is that the fixed sub-block length for a block of data is only required to satisfy the largest DCI payload size that is applicable to that particular block of data, and not the largest globally supported DCI payload size. This could result in potentially supporting a greater number of sub-blocks for a given block length, as compared to the embodiment of Figure 7.

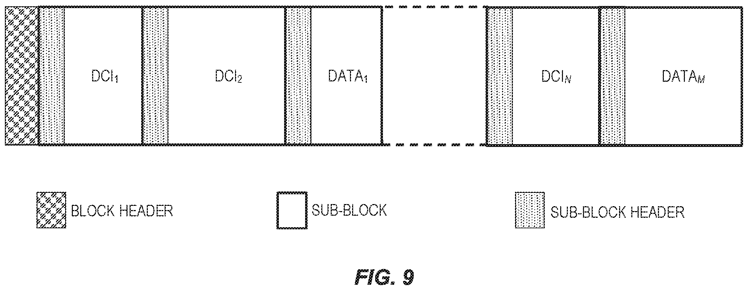

Figure 9 illustrates a block of data for transmission on a downlink control channel according to some embodiments of the present disclosure. This is referred to herein as "variant 3" of the block structure. Again, the block of data includes *N* DCI sub-blocks carrying *N* DCI messages, respectively, and *M* data sub-blocks carrying data that are multiplexed for a total of *N* + *M* sub-blocks, as discussed above. Here, the sub-block length (i.e., the length of each sub-block) is variable. In other words, Figure 9 illustrates a more flexible block structure in which the length of each sub-block may vary depending on the payload size for that sub-block. By using the variable sub-block lengths, this block structure eliminates the need to zero-fill certain sub-blocks, hence avoiding resource wastage. However, in this embodiment, the wireless devices 14 are informed (e.g., explicitly) about the length of each sub-block. In some embodiments, the sub-block header of each sub-block includes an indication of the sub-block length of that sub-block. In other embodiments, the block header includes an indication of the sub-block length of each sub-block in the block of data. Also, in some embodiments, the block header includes an indication of the number of sub-blocks in the block of data.

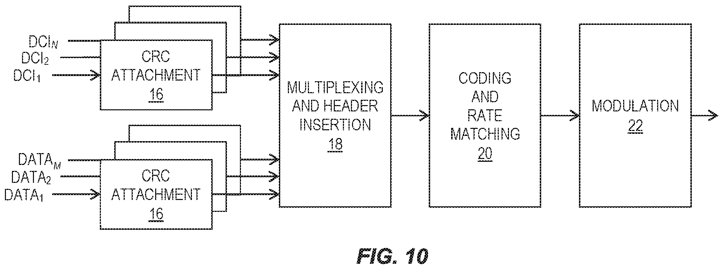

In some embodiments, CRC attachment is performed at the sub-block level. In other embodiments, CRC attachment is performed at the block level. In this regard, Figure 10 is a block diagram of a portion of the base station 12 that constructs a block of data and encodes and modulates the block of data for transmission on a downlink control channel according to some embodiments of the present disclosure. In Figure 10, CRC attachment is performed at the sub-block level. In particular, CRC attachment functions 16 perform CRC attachment for respective DCI messages (DCI₁ through DCI*_{N}*) and data (DATA₁ through DATA*_{M}*). After CRC attachment, a multiplexing and header insertion function 18 multiplexes the DCI messages (DCI₁ through DCI*_{N}*) and the data (DATA₁ through DATA*_{M}*) and inserts the appropriate block and/or sub-block headers, depending on the particular embodiment, to provide a block of data. A coding and rate matching function 20 then encodes the block of data to provide an encoded block of data. The encoding scheme used to encode the block of data may be any desired encoding scheme. However, in some embodiments, the encoding scheme is an advanced coding scheme such as, for example, a Turbo coding scheme, a Polar coding scheme, an LDPC coding scheme, or the like. However, other less advanced (i.e., less powerful) coding schemes such as, for example, Convolutional Coding may alternatively be used. A modulation function 22 modulates the encoded block of data according to a desired modulation scheme (e.g., QPSK, 16 Quadrature Amplitude Modulation (QAM) (16QAM), 64QAM, 256QAM, or the like). The resulting encoding and modulated block of data is then transmitted by the base station 12. Notably, this transmission may include further processing such as, for example, processing required to transmit the downlink channel according to an OFDM transmission scheme. Note that the functions 16, 18, 20, and 22 of Figure 10 may each be implemented in software executed by a processor(s) or hardware.

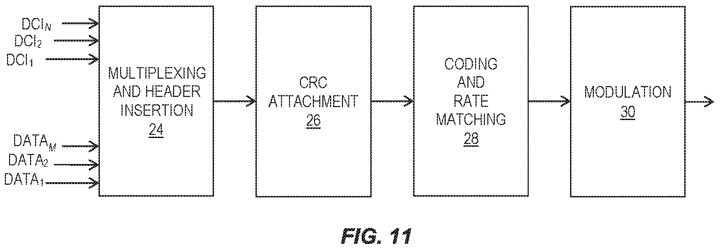

Figure 11 is a block diagram of a portion of the base station 12 that constructs a block of data and encodes and modulates the block of data for transmission on a downlink control channel according to some other embodiments of the present disclosure. In Figure 11, CRC attachment is performed at the block level. Block-level CRC attachment is referred to herein as "variant 4." In particular, a multiplexing and header insertion function 24 multiplexes DCI messages (DCI₁ through DCI*_{N}*) and data (DATA₁ through DATA*_{M}*) and inserts the appropriate block and/or sub-block headers, depending on the particular embodiment, to provide a block of data. A CRC attachment function 26 performs CRC attachment for the block of data. In other words, rather than performing CRC attachment at the sub-block level such that each sub-block would have its own CRC attached to the payload, the CRC attachment function 26 performs CRC attachment such that a common CRC is appended to the block of data as a whole. One benefit of using a common CRC for the block of data is that doing so uses fewer CRC bits overall, which may enable additional DCI message(s) and/or data to be included in the block.

A coding and rate matching function 28 then encodes the block of data to provide an encoded block of data. The encoding scheme used to encode the block of data may be any desired encoding scheme. However, in some embodiments, the encoding scheme is an advanced coding scheme such as, for example, a Turbo coding scheme, a Polar coding scheme, an LDPC coding scheme, or the like. However, other less advanced (i.e., less powerful) coding schemes such as, for example, Convolutional Coding may alternatively be used. A modulation function 30 modulates the encoded block of data according to a desired modulation scheme (e.g., QPSK, 16QAM, 64QAM, 256QAM, or the like). The resulting encoding and modulated block of data is then transmitted by the base station 12. Notably, this transmission may include further processing such as, for example, processing required to transmit the downlink channel according to an OFDM transmission scheme (e.g., the block of data is mapped to Resource Elements (REs) of the appropriate control symbol). Note that the functions 24, 26, 28, and 30 of Figure 11 may each be implemented in software executed by a processor(s) or hardware.

With respect to all of the embodiments described above, the sub-blocks may be used for any wireless device 14 or any group of wireless devices 14. Thus, when processing the sub-blocks to identify relevant sub-blocks, the wireless device 14 examines all sub-blocks. However, in some alternative embodiments, some or all of the sub-blocks may be restricted to certain wireless devices 14 or groups of wireless devices 14. This would, for example, reduce the complexity of a particular wireless device's search for relevant sub-blocks by enabling the wireless device 14 to search only those sub-blocks that are assigned to that wireless device 14 or assigned to a group of wireless devices 14 in which the wireless device14 is included. Sub-block restriction is referred to herein as "variant 5."

In other words, in order to, e.g., reduce the search complexity at the wireless device 14, the sub-blocks that can be assigned to a particular wireless device 14 could be restricted to a subset of the sub-blocks. The base station 12 and the wireless device 14 would agree beforehand to the subset of the sub-blocks to which the wireless device 14 can be assigned. In some embodiments, an indication of the subset of the sub-blocks to which the wireless device 14 is assigned can be communicated to the wireless device 14, e.g., explicitly by the base station 12 or implicitly through a predetermined formula that is known to the wireless device 14 a priori, for instance, similar to the way PDCCH candidates are restricted to the wireless device 14 based on its RNTI in current LTE-based systems. Sub-block restriction could be implemented with any other embodiments described above.

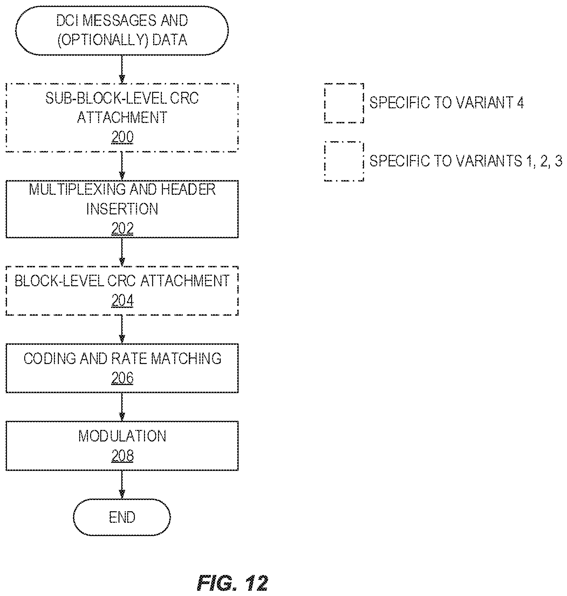

Figure 12 is a flow chart that illustrates the operation of the base station 12 according to some embodiments of the present disclosure. The process starts with *N* DCI messages and, optionally, *M* data. For variant 1 (permanent sub-block lengths), variant 2 (fixed sub-block length in a given block of data), and variant 3 (variable sub-block lengths), the base station 12 performs sub-block level CRC attachment separately for each DCI message and, if any, data (step 200). The base station 12 then performs multiplexing and header insertion to thereby provide the block of data (step 202). More specifically, the DCI messages and, optionally, data are multiplexed and the appropriate block and/or sub-block headers are inserted to thereby provide the block of data. As discussed above, the block of data includes *N* + *M* multiplexed sub-blocks. These multiplexed sub-blocks include *N* DCI sub-blocks, which include the *N* DCI messages respectively. In addition, in some embodiments where the block of data also includes data, the multiplexed sub-blocks include *M* data blocks, which include the *M* data. Note that DATA₁ through DATA*_{M}* may sometimes be referred to herein as *M* "data chunks." The data is, at least in some embodiments, user data, but is not limited thereto.

In variant 4 where block-level CRC attachment is to be performed, the base station 12 performs block-level CRC attachment (step 204). Note that, in some embodiments, the base station 12 performs sub-block level CRC attachment in step 200. In other embodiments, the base station 12 performs block-level CRC attachment in step 204. In other words, the base station 12 performs step 200 or step 204 depending on the particular embodiment, but not both. The base station 12 performs coding and rate matching for the block of data to thereby provide an encoded block of data (step 206). The base station 12 modulates the encoded block of data to provide an encoded and modulated block of data for transmission on a downlink control channel (step 208).

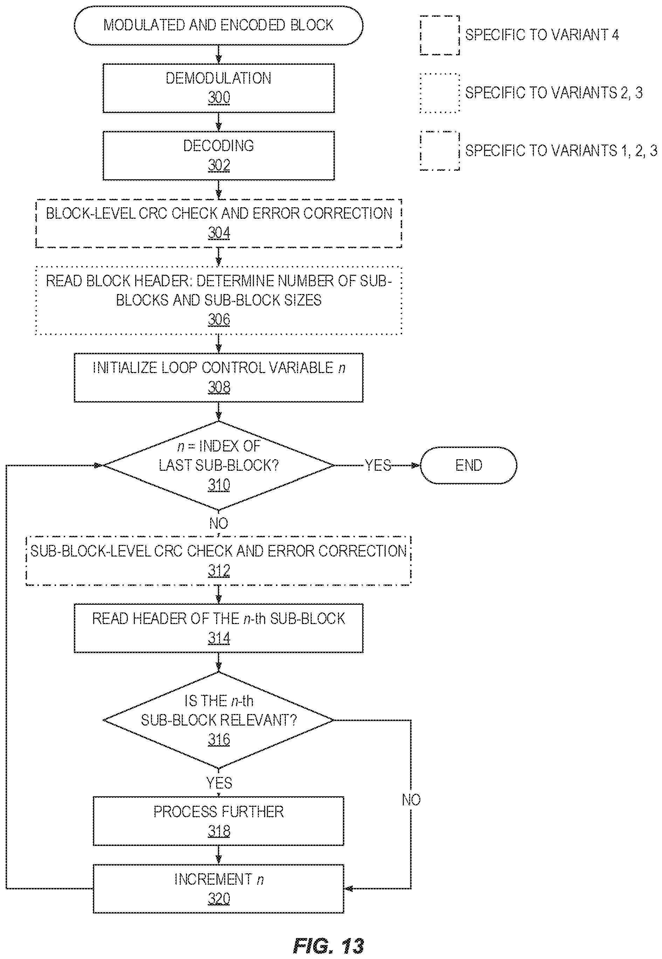

Figure 13 is a flow chart that illustrates the operation of the wireless device 14 to demodulate, decode, and process a block of data received on a downlink control channel according to some embodiments of the present disclosure. As illustrated, the process beings with the reception of a modulated and encoded block of data on a downlink control channel. The wireless device 14 demodulates and post-processes the information in the control symbol(s) of the downlink control channel until it has obtained the encoded block of data (step 300). The wireless device 14 decodes the encoded block of data to provide the (decoded) block of data (step 302).

At this stage, the wireless device 14 does not have any knowledge of the location of its corresponding DCI message(s) and/or data within the block, or whether this block contains any information that is relevant to the wireless device 14 at all. Therefore, the wireless device 14 resorts to searching through each of the sub-blocks, or a predetermined subset of the sub-blocks in the case of variant 5. Depending on the variant of the block structure, the wireless device 14 may need to inspect the headers of the block and/or the headers of the sub-blocks to determine how many sub-blocks there are, what the length of each sub-block is, and which ones contain relevant information. After this step, all irrelevant information is discarded and only the desired DCIs and/or data are further processed. Importantly, note that the wireless device 14 only has to perform a single decoding operation, after which it has a relatively computationally simple task of iterating through the sub-blocks to identify and process relevant DCI messages and/or data.

More specifically, in some embodiments (variant 4), the wireless device 14 performs a block-level CRC check and, optionally, error correction (step 304). Further, in some embodiments (variants 2 and 3), the wireless device 14 reads the block header for the block of data to determine the number of sub-blocks in the block of data and the sub-block sizes of the sub-blocks (step 306).

The wireless device 14 then searches the sub-blocks (or at least the sub-blocks that are assigned to the wireless device 14) for relevant sub-blocks and processes the DCI message(s) and/or data contained in the relevant sub-blocks. More specifically, in this example, the wireless device 14 initializes a loop control variable *n* (step 308). In some embodiments, the wireless device 14 processes all of the sub-blocks, and the loop control variable *n* is initialized to an index of the first sub-block in the block of data, which for this example is 1. However, in other embodiments, the wireless device 14 processes only a subset of the sub-blocks that have been assigned to the wireless device 14, and the loop control variable *n* is initialized to an index of the first sub-block in the subset of the sub-blocks that has been assigned to the wireless device 14. The wireless device 14 determines whether n is equal to the index of the last sub-block in the block of data or the last sub-block in the subset of sub-blocks that has been assigned to the wireless device 14, depending on the embodiment (step 310). If so, the process ends. Otherwise, in some embodiments (variants 1, 2, and 3 with sub-block level CRC attachment), the wireless device 14 performs a sub-block level CRC check and, optionally, error correction for sub-block *n* (step 312). Note that, depending on the embodiment, the wireless device 14 performs either a block-level CRC check in step 304 or a sub-block level CRC check in step 312, but not both.

In this embodiment, the wireless device 14 reads the sub-block header of sub-block n (step 314) and determines whether sub-block *n* is relevant to the wireless device 14 (step 316). More specifically, in some embodiments, the sub-block header includes an identifier of a wireless device 14 or a group of wireless devices 14 to which the respective DCI message or data is relevant. Based on this identifier and its own identifier or its own group identifier, the wireless device 14 determines whether sub-block *n* is relevant to the wireless device 14. However, in other embodiments, rather than using an identifier in the sub-block header, the CRC bits for the sub-block are scrambled with an identifier of a wireless device 14 or an identifier specific to a group of wireless devices 14 to which the respective DCI message or data is relevant. The wireless device 14 can then determine whether the sub-block is relevant to the wireless device 14 by determining whether the CRC bits were successfully de-scrambled using its own identifier or its own group identifier.

If the sub-block is not relevant to the wireless device 14, the sub-block is discarded and the process proceeds to step 320. If the sub-block is relevant to the wireless device 14, the wireless device 14 processes the respective DCI message or data contained in sub-block *n* (step 318). The wireless device 14 then increments the loop control variable n (step 320). In some embodiments, the wireless device 14 processes all of the sub-blocks, and the loop control variable *n* is incremented by a value of 1 (i.e., incremented to a value of an index of the next sub-block in the block of data). However, in other embodiments, the wireless device 14 processes only a subset of the sub-blocks that have been assigned to the wireless device 14, and the loop control variable *n* is incremented to a value of an index of the next sub-block in the subset of the sub-blocks that has been assigned to the wireless device 14. The process returns to step 310 and is repeated until the last sub-block has been processed.

The embodiments thus far have focused on the transmission of a block of data on a downlink control channel. However, embodiments relating to an eCFI for downlink control symbols are also disclosed. The eCFI may be used together with the embodiments described above or may be used independently from the embodiments described above (e.g., used for more conventional downlink control channel transmission in, e.g., LTE or LTE-Advanced networks).

In some particular embodiments, the eCFI can be used as a replacement for the CFI which exists in current LTE and LTE-Advanced standards. Recall that the conventional CFI conveys to the wireless device 14 only the number of OFDM symbols that are reserved for control information in a given subframe (i.e., the number of control symbols). The underlying configuration in the legacy systems dictates that the control information in these symbols is modulated using QPSK, regardless of the Channel Quality Indicator (CQI) reported by the applicable wireless devices 14. In other words, the spectral efficiency of the control channel is limited to 2 bits/sec/Hz, regardless of the channel conditions being experienced by the wireless devices 14.

The eCFI disclosed herein contains the following pieces of information:
- an indication of the number of control symbols, similar to legacy CFI, and
- an indication of the modulation and/or coding scheme used for all control channels in general (e.g., where all control channels use the same modulation and/or coding scheme) or an indication of the modulation and/or coding scheme for each subset of control channels (e.g., where different control channel subsets may use different modulation and/or coding schemes). For example, a control channel subset may include all control channels in one symbol and, in this case, eCFI can provide indication of the modulation and/or coding scheme for each symbol. In another example, a subset of control channels can be spread in time to be part of more than one symbol; for instance, the set of control channels in LTE can be divided into two subsets, where the first subset comprise the first half of CCEs and the second subset comprise the second half of CCEs. Each subset has a different modulation and/or coding scheme.
Note that there may be scenarios where the coding scheme is fixed for all symbols (e.g., all symbols will be encoded using LDPC code) or the coding scheme may change from symbol to symbol (e.g., first symbol is convolutional coding for low-complexity devices, and the second symbol is LDPC coding).

In some embodiments, the code rate is fixed or can be inferred by the wireless devices through blind decoding and, as such, may not be communicated in the eCFI. However, in other embodiments, the code rate is not fixed and the wireless devices cannot infer it through blind decoding and, as such, the eCFI further includes:
- an indication of the coding rate used for all control channels in general (e.g., where all control channels use the same coding rate) or an indication of the coding rate for each subset of control channels (e.g., where different control channel subsets may use different coding rates). For example, a control channel subset may include all control channels in one symbol and, in this case, eCFI can provide indication of the coding rate for each symbol. In another example, a subset of control channels can be spread in time to be part of more than one symbol; for instance, the set of control channels in LTE can be divided into two subsets, where the first subset comprise the first half of CCEs and the second subset comprise the second half of CCEs. Each subset has a different coding rate.

Notably, eCFI can be introduced as an enhancement to the current LTE and LTE-Advanced standard while preserving the backward compatibility as follows:
- The indication of the number of control symbols is transmitted using legacy CFI. This CFI will be decoded by legacy LTE wireless devices as well as the wireless devices 14 having eCFI capability.
- The indication of modulation scheme for each control channel subset is transmitted in a new control channel. This new indication will be only decoded by the wireless devices 14 having eCFI capabilities. A wireless device 14 with eCFI capabilities is expected to monitor this new channel.
- The absence of this indication indicates that the modulation scheme will not be varied, i.e., QPSK will be used for all control channels. Note that for LTE, we do not need to send explicitly the code rate because LTE devices use blind decoding.
- The base station12 ensures that the DCIs of legacy LTE devices are scheduled in a control channel subset where the modulation level is set to QPSK. For instance, the base station 12 may divide the set of CCEs into two sets where the first set is always modulated by QPSK to ensure that legacy devices can decode it, and the second set is modulated by a modulation level than can be higher than QPSK, which can be demodulated by the wireless devices 14 with eCFI capabilities.

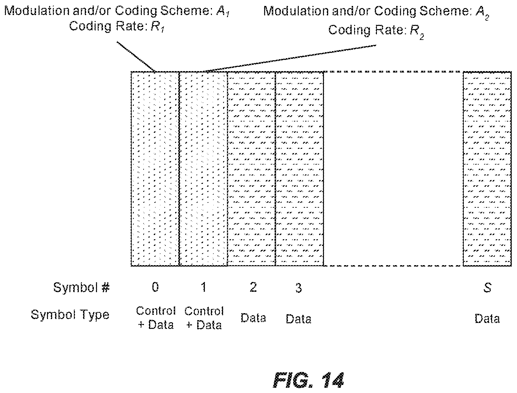

With the introduction of the eCFI, a dynamic multi-tiered control symbol hierarchy can be instated. In other words, the modulation scheme and coding rate can be varied from one control symbol to the next in order to accommodate wireless devices 14 with different degrees of channel quality. For example, suppose that there are three wireless devices 14 to be served in the subframe. The first wireless device 14 is experiencing highly favorable channel conditions, the second wireless device 14 is experiencing mildly favorable conditions, and the third wireless device 14 is experiencing unfavorable conditions. This information is assumed to either be fed back to the base station 12 from each of these wireless devices 14 or measured by the base station 12 itself by leveraging the reciprocity of the channel (if applicable) or by utilizing the success and failure of downlink transmissions through HARQ acknowledgements (ACKs) and negative acknowledgments (NACKs) fed back to the base station 12 by the wireless devices 14 or any other relevant technique. In such a scenario, the number of control symbols could be set to, e.g., two. The first control symbol could contain control information and data for the first two wireless devices 14. As such, its modulation scheme and coding rate, as specified via the eCFI, could be, e.g., 16QAM and a code rate value close to 1, respectively. However, for the second control symbol, in order to convey control information and data to the third wireless device 14, the modulation scheme could be, e.g., QPSK and the coding rate could be set to, e.g., a lower value (e.g., a value less than 1). A generalization of this example is illustrated in Figure 14, where there are two control symbols, each with a different modulation and/or coding scheme and coding rate for the control channel.

At the wireless device's end, unlike legacy where it would assume that all control information is modulated using QPSK, the wireless device 14 now extracts the three pieces of information listed above by decoding the eCFI. After extracting this information, the wireless device 14 can use this information to perform demodulation, decoding, etc. For example, in some embodiments, each control symbol may be used to a transmit a different block of data (i.e., each control symbol may correspond to a different downlink control channel in which a corresponding block of data is transmitted) according to any of the embodiments described above with respect to Figures 6-13, and the wireless device 14 may use the information conveyed by the eCFI for demodulation and decoding of the block of data in each of the control symbols.

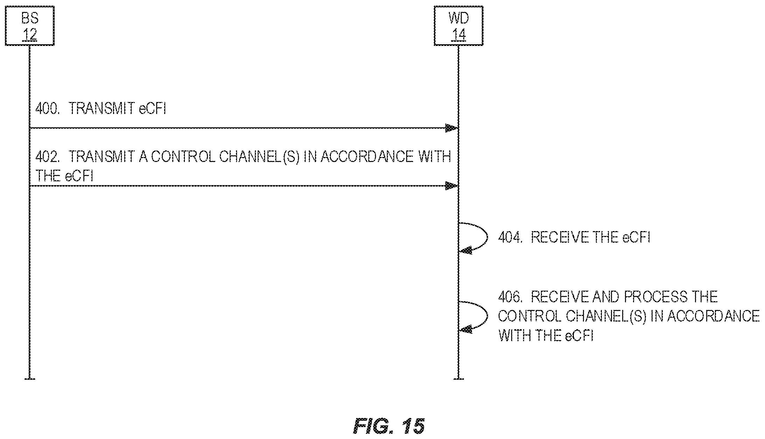

Figure 15 illustrates the operation of the base station 12 and the wireless device 14 to utilize the eCFI according to some embodiments of the present disclosure. As illustrated, the base station 12 transmits an eCFI in a downlink subframe (step 400). As discussed above, the eCFI includes information that indicates the number of control symbols in the downlink subframe and one or more modulation and/or coding schemes for the one or more control symbols in the downlink subframe, as discussed above. In some embodiments, the same modulation and/or coding scheme is used for all control channels, and the eCFI includes information that indicates the modulation and/or coding scheme used for all control channels transmitted in the control symbols in the downlink subframe. In other embodiments, different subsets of control channels may use different modulation and/or coding schemes, and the eCFI includes, for each subset of the control channels, information that indicates the modulation and/or coding scheme used for that subset of the control channels. In addition, in some embodiments, the eCFI includes information that indicates one or more code rates for the one or more control symbols in the downlink subframe, as discussed above. In some embodiments, the same code rate is used for all control channels, and the eCFI includes information that indicates the code rate used for all control channels transmitted in the control symbols in the downlink subframe. In other embodiments, different subsets of control channels may use different code rates, and the eCFI includes, for each subset of the control channels, information that indicates the code rate used for that subset of the control channels.

In addition, within the same subframe, the base station 12 transmits downlink control channel(s) in accordance with the eCFI (step 402). The downlink control channel(s) may be, e.g., conventional downlink control channels or downlink control channels according to any of the embodiments described above with respect to Figures 6-13. The wireless device 14 receives the eCFI (step 404). The wireless device 14 receives and processes the downlink control channel(s) in accordance with the information contained in the eCFI (step 406).

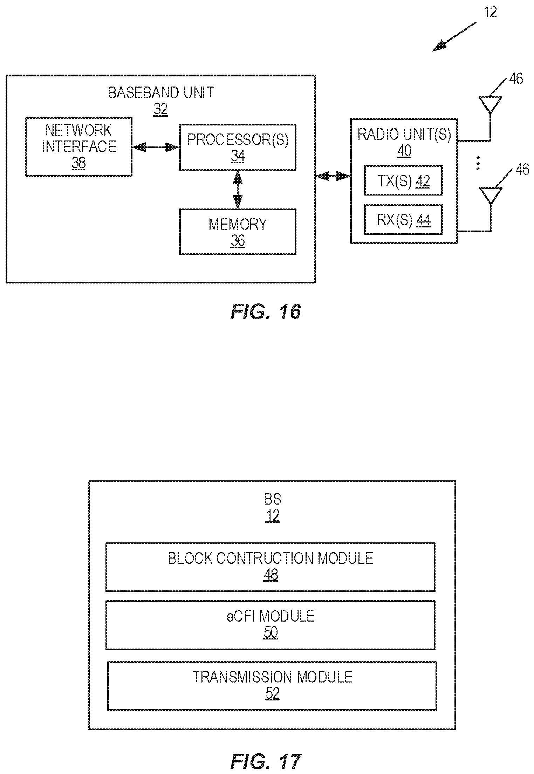

Figure 16 is schematic diagram of the base station 12 in accordance with some embodiments of the present disclosure. The base station 12 can be an LTE base station (e.g., an eNB) or another type of base station that can communicate wirelessly with the wireless device 14 (which, in LTE, may be a UE). The base station 12 includes a baseband unit 32 that includes one or more processors 34 (e.g., one or more Central Processing Units (CPUs), one or more Application Specific Integrated Circuits (ASICs), one or more Field Programmable Gate Arrays (FPGAs), and/or the like), memory 36, and a network interface 38. In addition, the base station 12 includes one or more radio units 40 including one or more transmitters 42 and one or more receivers 44 coupled to one or more antennas 46. The radio unit(s) 40 allows the base station 12 to send and receive wireless signals. The processor(s) 34 can execute instructions stored in the memory 36 based on signals received wirelessly via the radio unit(s) 40. In particular, in some embodiments, the functionality of the base station 12 described herein is implemented in software that is, e.g., stored in the memory 36 and executed by the processor(s) 34. The network interface 38 allows the base station 12 to interact with, e.g., a core network, such as sending and receiving signals from a wired link.

In some embodiments, a computer program including instructions which, when executed by at least one processor, causes the at least one processor to carry out the functionality of the base station 12 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 36).

Figure 17 illustrates the base station 12 according to some other embodiments of the present disclosure. The base station 12 includes a block construction module 48, an eCFI module 50, and a transmission module 52, each of which is implemented in software. Note that, in some embodiments, the base station 12 does not include the eCFI module 50, while in other embodiments the base station 12 does not include the block construction module 48. The block construction module 48 operates to construct a block of data for transmission on a downlink control channel, as described above. The eCFI module 50 operates to provide an eCFI for a downlink subframe, as described above. In some embodiments, the transmission module 52 operates to process the block data for transmission on the downlink control channel (e.g., encode and modulate the block of data, etc.), as described above, and transmit the downlink control channel via an associated transmitter(s) of the base station 12 (not shown). In some embodiments, the transmission module 52 operates to transmit the eCFI provided by the eCFI module 50 in a downlink subframe via an associated transmitter(s) of the base station 12 (not shown).

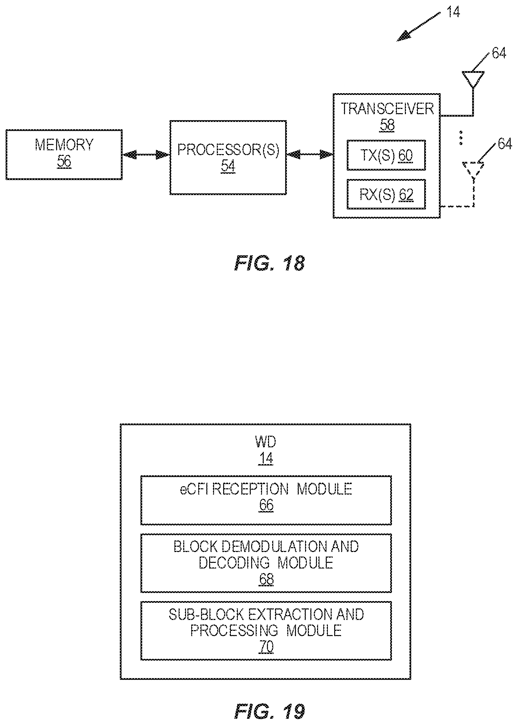

Figure 18 is a schematic diagram of the wireless device 14 in accordance with some embodiments of the present disclosure. The wireless device 14 is configured to send and receive wireless signals. The wireless device 14 includes one or more processors 54 (e.g., one or more CPUs, one or more ASICs, one or more FPGAs, and/or the like), memory 56, a transceiver 58 including one or more transmitters 60 and one or more receivers 62 coupled to one or more antennas 64. The transceiver 58 allows the wireless device 14 to send and receive wireless signals. The processor(s) 54 can execute instructions stored in the memory 56 based on, e.g., signals received wirelessly via the transceiver 58. In particular, in some embodiments, the functionality of the wireless device 14 described herein is implemented in software that is stored in the memory 56 and executed by the processor(s) 54.

In some embodiments, a computer program including instructions which, when executed by at least one processor, causes the at least one processor to carry out the functionality of the wireless device 14 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 56).

Figure 19 illustrates the wireless device 14 according to some other embodiments of the present disclosure. The wireless device 14 includes an eCFI reception module 66, a block demodulation and decoding module 68, and a sub-block extraction and processing module 70, each of which is implemented in software. Note that, in some embodiments, the wireless device 14 does not include the eCFI reception module 66, while in other embodiments, the wireless device 14 does not include the block demodulation and decoding module 68 and the sub-block extraction and processing module 70. The eCFI reception module 66 operates to receive (via an associated receiver of the wireless device 14, which is not shown) and process an eCFI for a downlink subframe, as described above. The block demodulation and decoding module 68 operates to demodulate and decode the block of data, as described above. The sub-block extraction and processing module 70 operates to identify relevant sub-blocks and to extract the respective DCI messages or data from the relevant sub-blocks, as described above.

The following acronyms are used throughout this disclosure.

| | |
|---|---|
| • µs | Microsecond |
| • 3GPP | Third Generation Partnership Project |
| • 5G | Fifth Generation |
| • ACK | Acknowledgement |
| • AL | Aggregation Level |
| • ASIC | Application Specific Integrated Circuit |
| • CCE | Control Channel Element |
| • CFI | Control Format Indicator |
| • CPU | Central Processing Unit |
| • CQI | Channel Quality Indicator |
| • CRC | Cyclic Redundancy Check |
| • CRS | Cell Specific Reference Signal |
| • DCI | Downlink Control Information |
| • DFT | Discrete Fourier Transform |
| • eCFI | Enhanced Control Format Indicator |
| • eNB | Enhanced or Evolved Node B |
| • EPDCCH | Enhanced Physical Downlink Control Channel |
| • FDMA | Frequency Division Multiple Access |
| • FPGA | Field Programmable Gate Array |
| • HARQ | Hybrid Automatic Repeat Request |
| • Hz | Hertz |
| • LDPC | Low-Density Parity Check |
| • LTE | Long Term Evolution |
| • MHz | Megahertz |
| • ms | Millisecond |
| • MTC | Machine Type Communication |
| • NACK | Negative Acknowledgement |
| • OFDM | Orthogonal Frequency Division Multiplexing |
| • PCFICH | Physical Control Format Indicator Channel |
| • PDCCH | Physical Downlink Control Channel |
| • PDSCH | Physical Downlink Shared Channel |
| • PRB | Physical Resource Block |
| • PUCCH | Physical Uplink Control Channel |
| • PUSCH | Physical Uplink Shared Channel |
| • QAM | Quadrature Amplitude Modulation |
| • QPSK | Quadrature Phase Shift Keying |
| • RE | Resource Element |
| • REG | Resource Element Group |
| • Rel-8 | Release 8 |
| • Rel-10 | Release 10 |
| • Rel-11 | Release 11 |
| • RNTI | Radio Network Temporary Identifier |
| • SC-FDMA | Single Carrier Frequency Division Multiple Access |
| • TS | Technical Specification |
| • UE | User Equipment |
| • WLAN | Wireless Local Area Network |

Those skilled in the art will recognize improvements and modifications to the embodiments of the present disclosure. All such improvements and modifications are considered within the scope of the concepts disclosed herein and the claims that follow.

## Claims

1. A method of operation of a radio access node (12) of a cellular communications network (10), comprising:
multiplexing (100, 200-204) a plurality of sub-blocks into a block of data for transmission on a downlink control channel, the plurality of sub-blocks comprising a plurality of downlink control information sub-blocks, wherein the plurality of downlink control information sub-blocks comprises a respective plurality of downlink control information messages;
encoding and modulating (102, 206-208) the block of data to provide an encoded and modulated block of data; and
transmitting (104) the encoded and modulated block of data on the downlink control channel, **characterised in that**:
the plurality of multiplexed sub-blocks further comprises one or more data sub-blocks, the one or more data sub-blocks each comprising respective user data.

2. The method of claim 1 wherein encoding and modulating (102, 206-208) the block of data comprises:
encoding (206) the block of data according to an advanced encoding scheme to provide an encoded block of data; and
modulating (208) the encoded block of data to provide the encoded and modulated block of data,
wherein the advanced encoding scheme is one of a group consisting of: Turbo encoding, Polar encoding, Low-Density Parity Check, LDPC, encoding, and Convolutional encoding.

3. The method of claim 1 or 2 wherein lengths of the plurality of multiplexed sub-blocks are variable, and wherein the block of data further comprises a block header comprising, for each sub-block of the plurality of multiplexed sub-blocks, an indication of the length of the sub-block, or
wherein each sub-block of the plurality of multiplexed sub-blocks comprises a respective sub-block header comprising an indication of the length of the sub-block.

4. The method of any of claims 1 - 3 wherein each sub-block of the plurality of multiplexed sub-blocks comprises a respective sub-block header comprising an identifier, the identifier being one of a group consisting of: a unique wireless device (14) identifier and an identifier that is specific to a group of wireless devices (14).

5. The method of any of claims 1 - 4 wherein multiplexing (100, 200-204) the plurality of sub-blocks into the block of data for transmission on the downlink control channel comprises:
performing (200) sub-block-level Cyclic Redundancy Check, CRC, attachment for a plurality of messages/data comprising the plurality of downlink control information messages; and
multiplexing (202) the plurality of messages/data to thereby provide the plurality of multiplexed sub-blocks,
wherein, for at least one of the plurality of messages/data, a respective CRC is scrambled with an identifier, the identifier being one of a group consisting of: a unique wireless device (14) identifier and an identifier that is specific to a group of wireless devices (14).

6. The method of any of claims 1 - 4 wherein multiplexing (100, 200-204) the plurality of sub-blocks into the block of data for transmission on the downlink control channel comprises:
multiplexing (202) a plurality of messages/data comprising the plurality of downlink control information messages to thereby provide the plurality of multiplexed sub-blocks; and
performing (204) block-level Cyclic Redundancy Check, CRC, attachment for the block of data comprising the plurality of multiplexed sub-blocks.

7. The method of any of claims 1-2, wherein all of the plurality of multiplexed sub-blocks have a predefined, fixed sub-block length for all such blocks of data, or
wherein all of the plurality of multiplexed sub-blocks have a fixed sub-block length specific to the block of data, and the block of data further comprises a block header comprising at least one of: an indication of the fixed sub-block length specific to the block of data and a number of sub-blocks in the block of data.

8. The method of any of claims 1-7, wherein multiplexing (100, 200-204) the plurality of sub-blocks into the block of data for transmission on the downlink control channel comprises multiplexing (100, 200-204) the plurality of sub-blocks into the block of data for transmission on the downlink control channel such that a downlink control information message relevant to a particular wireless device (14) is assigned to one of a predefined subset of the plurality of multiplexed sub-blocks within the block of data.

9. The method of any of claims 1-8 the method further comprising transmitting an indicator that comprises information that is indicative of:
• one of a group consisting of:
- a modulation and/or coding scheme used for all control channels transmitted in the control symbols in the downlink subframe; and
- for each of a plurality of subsets of control channels transmitted in the control symbols in the downlink subframe, a modulation and/or coding scheme used for the subset of the control channels.

10. A radio access node (12) of a cellular communications network (10), comprising:
one or more radio units (40); and
a baseband unit (32) adapted to:
multiplex a plurality of sub-blocks into a block of data for transmission on a downlink control channel, the plurality of sub-blocks comprising a plurality of downlink control information sub-blocks, wherein the plurality of downlink control information sub-blocks comprises a respective plurality of downlink control information messages;
encode and modulate the block of data to provide an encoded and modulated block of data; and
transmit, via the one or more radio units (40), the encoded and modulated block of data on the downlink control channel, **characterised in that**:
the plurality of multiplexed sub-blocks further comprises one or more data sub-blocks, the one or more data sub-blocks each comprising respective user data.

11. A method of operation of a wireless device (14) in a cellular communications network (10), comprising:
demodulating and decoding (106, 300-302) an encoded and modulated block of data received on a downlink control channel to provide a decoded and demodulated block of data comprising a plurality of multiplexed sub-blocks, the plurality of multiplexed sub-blocks comprising a plurality of downlink control information sub-blocks comprising a respective plurality of downlink control information messages; and
extracting and processing (108, 304-320) one or more of the plurality of multiplexed sub-blocks that are relevant to the wireless device (14),
**characterised in that**:
the plurality of multiplexed sub-blocks further comprise one or more data sub-blocks, the one or more user data sub-blocks each comprising respective user data.

12. The method of claim 11 wherein demodulating and decoding (106, 300-302) the encoded and modulated block of data comprises:
demodulating (300) the encoded and modulated block of data to provide a demodulated block of data; and
decoding (302) the demodulated block of data according to an advanced decoding scheme to provide the decoded and demodulated block of data,
wherein the advanced decoding scheme is one of a group consisting of: Turbo decoding, Polar decoding, Low Density Parity Check, LDPC, decoding, and Convolutional decoding.

13. The method of claim 11, wherein all of the plurality of multiplexed sub-blocks have a predefined, fixed sub-block length for all such blocks of data, or have a fixed sub-block length specific to the decoded and demodulated block of data.

14. A wireless device (14) enabled to operate in a cellular communications network (10), comprising:
a transceiver (58); and
one or more processors (54) adapted to:
demodulate and decode an encoded and modulated block of data received on a downlink control channel to provide a decoded and demodulated block of data comprising a plurality of multiplexed sub-blocks, the plurality of multiplexed sub-blocks comprising a plurality of downlink control information sub-blocks comprising a respective plurality of downlink control information messages; and
extract and process one or more of the plurality of multiplexed sub-blocks that are relevant to the wireless device (14), **characterised in that**:
the plurality of multiplexed sub-blocks further comprise one or more data sub-blocks, the one or more user data sub-blocks each comprising respective user data.

15. A computer program comprising instructions which, when executed on at least one processor, cause the at least one processor to carry out the method according to any one of claims 1- 9 or 11-12.

## Patentansprüche

1. Verfahren zum Betreiben eines Funkzugangsknotens (12) eines zellularen Kommunikationsnetzes (10), umfassend:
Multiplexen (100, 200-204) einer Vielzahl von Teilblöcken in einen Datenblock zur Übertragung auf einem Downlink-Steuerkanal, wobei die Vielzahl von Teilblöcken eine Vielzahl von Downlink-Steuerinformationsteilblöcken umfasst, wobei die Vielzahl von Downlink-Steuerinformationsteilblöcken eine entsprechende Vielzahl von Downlink-Steuerinformationsnachrichten umfasst;
Codieren und Modulieren (102, 206-208) des Datenblocks, um einen codierten und modulierten Datenblock bereitzustellen; und
Übertragen (104) des codierten und modulierten Datenblocks auf dem Downlink-Steuerkanal,
**dadurch gekennzeichnet, dass:**
die Vielzahl von gemultiplexten Teilblöcken ferner einen oder mehrere Daten-Teilblöcke umfasst, wobei der eine oder die mehreren Daten-Teilblöcke jeweils entsprechende Benutzerdaten umfassen.

2. Verfahren nach Anspruch 1, wobei das Codieren und Modulieren (102, 206-208) des Datenblocks umfasst:
Codieren (206) des Datenblocks gemäß einem erweiterten Codierungsschema, um einen codierten Datenblock bereitzustellen; und
Modulieren (208) des codierten Datenblocks, um den codierten und modulierten Datenblock bereitzustellen,
wobei das erweiterte Codierungsschema eines von einer Gruppe ist, bestehend aus: Turbo-Codieren, Polar-Codieren, Codieren mit Paritätsprüfung niedriger Dichte, LDPC-Codieren, und Faltungscodieren.

3. Verfahren nach Anspruch 1 oder 2, wobei Längen der Vielzahl von gemultiplexten Teilblöcken variabel sind, und wobei der Datenblock ferner einen Blockkopf umfasst, der für jeden Teilblock der Vielzahl von gemultiplexten Teilblöcken eine Angabe zur Länge des Teilblocks umfasst, oder
wobei jeder Teilblock der Vielzahl von gemultiplexten Teilblöcken einen jeweiligen Teilblockkopf umfasst, der eine Angabe zur Länge des Teilblocks umfasst.

4. Verfahren nach einem der Ansprüche 1-3, wobei jeder Teilblock der Vielzahl von gemultiplexten Teilblöcken einen jeweiligen Teilblockkopf umfasst, der eine Kennung umfasst, wobei die Kennung eine von einer Gruppe ist, bestehend aus: einer eindeutigen Kennung für eine drahtlose Vorrichtung (14) und einer Kennung, die für eine Gruppe von drahtlosen Vorrichtungen (14) spezifisch ist.

5. Verfahren nach einem der Ansprüche 1-4, wobei das Multiplexen (100, 200-204) der Vielzahl von Teilblöcken in den Datenblock zur Übertragung auf dem Downlink-Steuerkanal umfasst:
Durchführen (200) einer zyklischen Redundanzüberprüfungsanlage, CRC-Anlage, auf Teilblockebene für eine Vielzahl von Nachrichten/Daten, die die Vielzahl von Downlink-Steuerinformationsnachrichten umfasst; und
Multiplexen (202) der Vielzahl von Nachrichten/Daten, um dadurch die Vielzahl von gemultiplexten Teilblöcken bereitzustellen,
wobei für mindestens eine der Vielzahl von Nachrichten/Daten eine entsprechende CRC mit einer Kennung verschlüsselt wird, wobei die Kennung eine von einer Gruppe ist, bestehend aus: einer eindeutigen Kennung für eine drahtlose Vorrichtung (14) und einer Kennung, die für eine Gruppe von drahtlosen Vorrichtungen (14) spezifisch ist.

6. Verfahren nach einem der Ansprüche 1-4, wobei das Multiplexen (100, 200-204) der Vielzahl von Teilblöcken in den Datenblock zur Übertragung auf dem Downlink-Steuerkanal umfasst:
Multiplexen (202) einer Vielzahl von Nachrichten/Daten, die die Vielzahl von Downlink-Steuerinformationsnachrichten umfassen, um dadurch die Vielzahl von gemultiplexten Teilblöcken bereitzustellen; und
Durchführen (204) der Anlage einer zyklischen Redundanzprüfung, CRC, auf Blockebene für den Datenblock, der die Vielzahl von gemultiplexten Teilblöcken umfasst.

7. Verfahren nach einem der Ansprüche 1-2, wobei alle der Vielzahl von gemultiplexten Teilblöcken eine vordefinierte, feste Teilblocklänge für alle derartigen Datenblöcke aufweisen, oder
wobei alle der Vielzahl von gemultiplexten Teilblöcken eine feste Teilblocklänge aufweisen, die für den Datenblock spezifisch ist, und der Datenblock ferner einen Blockkopf umfasst, der mindestens eines umfasst von: einer Angabe der festen Teilblocklänge, die für den Datenblock spezifisch ist, und einer Anzahl von Teilblöcken im Datenblock.

8. Verfahren nach einem der Ansprüche 1-7, wobei das Multiplexen (100, 200-204) der Vielzahl von Teilblöcken in den Datenblock zur Übertragung auf dem Downlink-Steuerkanal das Multiplexen (100, 200-204) der Vielzahl von Teilblöcken in den Datenblock zur Übertragung auf dem Downlink-Steuerkanal umfasst, so dass eine Downlink-Steuerinformationsnachricht, die für eine bestimmte drahtlose Vorrichtung (14) relevant ist, einer von einer vordefinierten Untergruppe der Vielzahl von gemultiplexten Teilblöcken innerhalb des Datenblocks zugeordnet ist.

9. Verfahren nach einem der Ansprüche 1-8, wobei das Verfahren ferner das Übertragen eines Indikators umfasst, der Informationen umfasst, die hinweisen auf:
• eines aus einer Gruppe bestehend aus:
- einem Modulations- und/oder Codierungsschema, das für alle Steuerkanäle verwendet wird, die in den Steuersymbolen im Downlink-Unterrahmen übertragen werden; und
- für jeden aus einer Vielzahl von Untergruppen von Steuerkanälen, die in den Steuersymbolen im Downlink-Unterrahmen übertragen werden, ein Modulations- und/oder Codierungsschema, das für die Untergruppe der Steuerkanäle verwendet wird.

10. Funkzugangsknoten (12) eines zellularen Kommunikationsnetzes (10), umfassend:
eine oder mehrere Funkeinheiten (40); und
eine Basisbandeinheit (32), die angepasst ist zum:
Multiplexen einer Vielzahl von Teilblöcken in einen Datenblock zur Übertragung auf einem Downlink-Steuerkanal, wobei die Vielzahl von Teilblöcken eine Vielzahl von Downlink-Steuerinformationsteilblöcken umfasst, wobei die Vielzahl von Downlink-Steuerinformationsteilblöcken eine entsprechende Vielzahl von Downlink-Steuerinformationsnachrichten umfasst;
Codieren und Modulieren des Datenblocks, um einen codierten und modulierten Datenblock bereitzustellen; und
Übertragen des codierten und modulierten Datenblocks auf dem Downlink-Steuerkanal über die eine oder die mehreren Funkeinheiten (40),
**dadurch gekennzeichnet, dass:**
die Vielzahl der gemultiplexten Teilblöcke ferner einen oder mehrere Daten-Teilblöcke umfasst, wobei der eine oder die mehreren Daten-Teilblöcke jeweils entsprechende Benutzerdaten umfassen.

11. Verfahren zum Betreiben einer drahtlosen Vorrichtung (14) in einem zellularen Kommunikationsnetz (10), umfassend:
Demodulieren und Decodieren (106, 300-302) eines codierten und modulierten Datenblocks, der auf einem Downlink-Steuerkanal empfangen wurde, um einen decodierten und demodulierten Datenblock bereitzustellen, der eine Vielzahl von gemultiplexten Teilblöcken umfasst, wobei die Vielzahl von gemultiplexten Teilblöcken eine Vielzahl von Downlink-Steuerinformationsteilblöcken umfasst, die eine entsprechende Vielzahl von Downlink-Steuerinformationsnachrichten umfassen; und
Extrahieren und Verarbeiten (108, 304-320) von einem oder mehreren der Vielzahl von gemultiplexten Teilblöcken, die für die drahtlose Vorrichtung (14) relevant sind,
**dadurch gekennzeichnet, dass:**
die Vielzahl von gemultiplexten Teilblöcken ferner einen oder mehrere Daten-Teilblöcke umfasst, wobei der eine oder die mehreren Benutzerdaten-Teilblöcke jeweils entsprechende Benutzerdaten umfassen.

12. Verfahren nach Anspruch 11, wobei das Demodulieren und Decodieren (106, 300-302) des codierten und modulierten Datenblocks umfasst:
Demodulieren (300) des codierten und modulierten Datenblocks, um einen demodulierten Datenblock bereitzustellen; und
Decodieren (302) des demodulierten Datenblocks gemäß einem erweiterten Decodierungsschema, um den decodierten und demodulierten Datenblock bereitzustellen,
wobei das erweiterte Decodierungsschema eines aus einer Gruppe ist, bestehend aus: Turbo-Decodieren, Polar-Decodieren, Decodieren mit Paritätsprüfung niedriger Dichte, LDPC-Decodieren, und Faltendecodieren.

13. Verfahren nach Anspruch 11, wobei alle der Vielzahl von gemultiplexten Teilblöcken eine vordefinierte, feste Teilblocklänge für alle derartigen Datenblöcke aufweisen oder
eine feste Teilblocklänge aufweisen, die für den decodierten und demodulierten Datenblock spezifisch ist.

14. Drahtlose Vorrichtung (14), die zum Betreiben in einem zellularen Kommunikationsnetz (10) in der Lage ist, umfassend:
einen Sender-Empfänger (58); und
einen oder mehrere Prozessoren (54), die angepasst sind zum:
Demodulieren und Decodieren eines codierten und modulierten Datenblocks, der auf einem Downlink-Steuerkanal empfangen wird, um einen decodierten und demodulierten Datenblock bereitzustellen, der eine Vielzahl von gemultiplexten Teilblöcken umfasst, wobei die Vielzahl von gemultiplexten Teilblöcken eine Vielzahl von Downlink-Steuerinformationsteilblöcken umfasst, die eine entsprechende Vielzahl von Downlink-Steuerinformationsnachrichten umfassen; und
Extrahieren und Verarbeiten von einem oder mehreren der Vielzahl von gemultiplexten Teilblöcken, die für die drahtlose Vorrichtung (14) relevant sind,
**dadurch gekennzeichnet, dass:**
die Vielzahl von gemultiplexten Teilblöcken ferner einen oder mehrere Daten-Teilblöcke umfasst, wobei die eine oder die mehreren Benutzerdaten-Teilblöcke jeweils entsprechende Benutzerdaten umfassen.

15. Computerprogramm, das Anweisungen umfasst, die bei Ausführung auf mindestens einem Prozessor bewirken, dass der mindestens eine Prozessor das Verfahren nach einem der Ansprüche 1-9 oder 11-12 ausführt.

## Revendications

1. Procédé de fonctionnement d'un nœud d'accès radio (12) d'un réseau de communications cellulaire (10), comprenant :
le multiplexage (100, 200-204) d'une pluralité de sous-blocs en un bloc de données pour transmission sur un canal de commande de liaison descendante, la pluralité de sous-blocs comprenant une pluralité de sous-blocs d'informations de commande de liaison descendante, dans lequel la pluralité de sous-blocs d'informations de commande de liaison descendante comprend une pluralité respective de messages d'informations de commande de liaison descendante ;
le codage et la modulation (102, 206-208) du bloc de données pour fournir un bloc de données codé et modulé ; et
la transmission (104) du bloc de données codé et modulé sur le canal de commande de liaison descendante, **caractérisé en ce que** : la pluralité de sous-blocs multiplexés comprend en outre un ou plusieurs sous-blocs de données, le ou les sous-blocs de données comprenant chacun des données utilisateur respectives.

2. Procédé selon la revendication 1 dans lequel le codage et la modulation (102, 206-208) du bloc de données comprennent :
le codage (206) du bloc de données selon un schéma de codage avancé pour fournir un bloc de données codé; et
la modulation (208) du bloc de données codé pour fournir le bloc de données codé et modulé,
dans lequel le schéma de codage avancé est l'un parmi un groupe constitué de : codage turbo, codage polaire, codage à vérification de parité à faible densité, LDPC, et codage convolutionnel.

3. Procédé selon la revendication 1 ou 2 dans lequel des longueurs de la pluralité de sous-blocs multiplexés sont variables, et dans lequel le bloc de données comprend en outre un en-tête de bloc comprenant, pour chaque sous-bloc de la pluralité de sous-blocs multiplexés, une indication de la longueur du sous-bloc, ou
dans lequel chaque sous-bloc de la pluralité de sous-blocs multiplexés comprend un en-tête de sous-bloc respectif comprenant une indication de la longueur du sous-bloc.

4. Procédé selon l'une quelconque des revendications 1 à 3 dans lequel chaque sous-bloc de la pluralité de sous-blocs multiplexés comprend un en-tête de sous-bloc respectif comprenant un identificateur, l'identificateur étant l'un parmi un groupe constitué de : un identificateur unique de dispositif sans fil (14) et un identificateur qui est spécifique d'un groupe de dispositifs sans fil (14).

5. Procédé selon l'une quelconque des revendications 1 à 4 dans lequel le multiplexage (100, 200-204) de la pluralité de sous-blocs en le bloc de données pour transmission sur le canal de commande de liaison descendante comprend :
la mise en œuvre (200) d'une adjonction de contrôle de redondance cyclique, CRC, au niveau sous-bloc pour une pluralité de messages/données comprenant la pluralité de messages d'informations de commande de liaison descendante ; et
le multiplexage (202) de la pluralité de messages/données pour fournir de ce fait la pluralité de sous-blocs multiplexés,
dans lequel, pour au moins l'un parmi la pluralité de messages/données, un CRC respectif est brouillé avec un identificateur, l'identificateur étant l'un parmi un groupe constitué de : un identificateur unique de dispositif sans fil (14) et un identificateur qui est spécifique d'un groupe de dispositifs sans fil (14).

6. Procédé selon l'une quelconque des revendications 1 à 4 dans lequel le multiplexage (100, 200-204) de la pluralité de sous-blocs en le bloc de données pour transmission sur le canal de commande de liaison descendante comprend :
le multiplexage (202) d'une pluralité de messages/données comprenant la pluralité de messages d'informations de commande de liaison descendante pour fournir de ce fait la pluralité de sous-blocs multiplexés ; et
la mise en œuvre (204) d'une adjonction de contrôle de redondance cyclique, CRC, au niveau bloc pour le bloc de données comprenant la pluralité de sous-blocs multiplexés.

7. Procédé selon l'une quelconque des revendications 1 ou 2, dans lequel tous parmi la pluralité de sous-blocs multiplexés ont une longueur de sous-bloc fixe prédéfinie pour tous les blocs de données tels, ou
dans lequel tous parmi la pluralité de sous-blocs multiplexés ont une longueur de sous-bloc fixe spécifique du bloc de données, et le bloc de données comprend en outre un en-tête de bloc comprenant au moins l'un parmi : une indication de la longueur de sous-bloc fixe spécifique du bloc de données et un nombre de sous-blocs dans le bloc de données.

8. Procédé selon l'une quelconque des revendications 1 à 7, dans lequel le multiplexage (100, 200-204) de la pluralité de sous-blocs en le bloc de données pour transmission sur le canal de commande de liaison descendante comprend le multiplexage (100, 200-204) de la pluralité de sous-blocs en le bloc de données pour transmission sur le canal de commande de liaison descendante de sorte qu'un message d'informations de commande de liaison descendante en rapport avec un dispositif sans fil particulier (14) est attribué à l'un parmi un sous-ensemble prédéfini de la pluralité de sous-blocs multiplexés au sein du bloc de données.

9. Procédé selon l'une quelconque des revendications 1 à 8 le procédé comprenant en outre la transmission d'un indicateur qui comprend des informations qui sont indicatives de :
• l'un parmi un groupe constitué de :
- un schéma de modulation et/ou de codage utilisé pour tous les canaux de commande transmis dans les symboles de commande dans la sous-trame de liaison descendante ; et
- pour chacun parmi une pluralité de sous-ensembles de canaux de commande transmis dans les symboles de commande dans la sous-trame de liaison descendante, un schéma de modulation et/ou de codage utilisé pour le sous-ensemble des canaux de commande.

10. Nœud d'accès radio (12) d'un réseau de communications cellulaire (10), comprenant :
une ou plusieurs unités radio (40) ; et
une unité de bande de base (32) conçue pour :
multiplexer une pluralité de sous-blocs en un bloc de données pour transmission sur un canal de commande de liaison descendante, la pluralité de sous-blocs comprenant une pluralité de sous-blocs d'informations de commande de liaison descendante, dans lequel la pluralité de sous-blocs d'informations de commande de liaison descendante comprend une pluralité respective de messages d'informations de commande de liaison descendante ;
coder et moduler le bloc de données pour fournir un bloc de données codé et modulé ; et
transmettre, via la ou les unités radio (40), le bloc de données codé et modulé sur le canal de commande de liaison descendante, **caractérisé en ce que :** la pluralité de sous-blocs multiplexés comprend en outre un ou plusieurs sous-blocs de données, le ou les sous-blocs de données comprenant chacun des données utilisateur respectives.

11. Procédé de fonctionnement d'un dispositif sans fil (14) dans un réseau de communications cellulaire (10), comprenant :
la démodulation et le décodage (106, 300-302) d'un bloc de données codé et modulé reçu sur un canal de commande de liaison descendante pour fournir un bloc de données décodé et démodulé comprenant une pluralité de sous-blocs multiplexés, la pluralité de sous-blocs multiplexés comprenant une pluralité de sous-blocs d'informations de commande de liaison descendante comprenant une pluralité respective de messages d'informations de commande de liaison descendante ; et
l'extraction et le traitement (108, 304-320) d'un ou plusieurs parmi la pluralité de sous-blocs multiplexés qui sont en rapport avec le dispositif sans fil (14), **caractérisé en ce que :** la pluralité de sous-blocs multiplexés comprennent en outre un ou plusieurs sous-blocs de données, le ou les sous-blocs de données utilisateur comprenant chacun des données utilisateur respectives.

12. Procédé selon la revendication 11 dans lequel la démodulation et le décodage (106, 300-302) du bloc de données codé et modulé comprend :
la démodulation (300) du bloc de données codé et modulé pour fournir un bloc de données démodulé ; et
le décodage (302) du bloc de données démodulé selon un schéma de décodage avancé pour fournir le bloc de données décodé et démodulé,
dans lequel le schéma de décodage avancé est l'un parmi un groupe constitué de : décodage turbo, décodage polaire, décodage à vérification de parité à faible densité, LDPC, et décodage convolutionnel.

13. Procédé selon la revendication 11, dans lequel tous parmi la pluralité de sous-blocs multiplexés ont une longueur de sous-bloc fixe prédéfinie pour tous les blocs de données tels, ou
ont une longueur de sous-bloc fixe spécifique du bloc de données décodé et démodulé.

14. Dispositif sans fil (14) habilité à fonctionner dans un réseau de communications cellulaire (10), comprenant :
un émetteur-récepteur (58) ; et
un ou plusieurs processeurs (54) conçus pour :
démoduler et décoder un bloc de données codé et modulé reçu sur un canal de commande de liaison descendante pour fournir un bloc de données décodé et démodulé comprenant une pluralité de sous-blocs multiplexés, la pluralité de sous-blocs multiplexés comprenant une pluralité de sous-blocs d'informations de commande de liaison descendante comprenant une pluralité respective de messages d'informations de commande de liaison descendante ; et
extraire et traiter un ou plusieurs parmi la pluralité de sous-blocs multiplexés qui sont en rapport avec le dispositif sans fil (14), **caractérisé en ce que :** la pluralité de sous-blocs multiplexés comprennent en outre un ou plusieurs sous-blocs de données, le ou les sous-blocs de données utilisateur comprenant chacun des données utilisateur respectives.

15. Programme d'ordinateur, comprenant des instructions qui, lorsqu'elles sont exécutées sur au moins un processeur, amènent l'au moins un processeur à effectuer le procédé selon l'une quelconque des revendications 1 à 9 ou 11 ou 12.
